(19) Europäisches Patentamt
European Patent Office
Office européen des brevets

(11) **EP 3 455 477 B1**

(12) **EUROPÄISCHE PATENTSCHRIFT**

(45) Veröffentlichungstag und Bekanntmachung des Hinweises auf die Patenterteilung:
**24.03.2021 Patentblatt 2021/12**

(21) Anmeldenummer: **17718897.6**

(22) Anmeldetag: **20.04.2017**

(51) Int Cl.:
*F02B 37/02* (2006.01)  *F02B 37/18* (2006.01)
*F16K 1/20* (2006.01)  *F01D 17/10* (2006.01)
*F02B 37/22* (2006.01)

(86) Internationale Anmeldenummer:
**PCT/EP2017/059400**

(87) Internationale Veröffentlichungsnummer:
**WO 2017/194287 (16.11.2017 Gazette 2017/46)**

(54) **TURBINE FÜR EINEN ABGASTURBOLADER MIT ZWEIFLUTIGEM TURBINENGEHÄUSE UND EINEM LINEARVENTIL ZUR FLUTENVERBINDUNG UND WASTEGATE-STEUERUNG**

TURBINE FOR A TURBOCHARGER WITH TWO SCROLLS HOUSING AND VALVE ARRANGEMENT FOR SCROLL CONNEXION AND WASTEGATE CONTROL

TURBINE POUR UNE TURBOCOMPRESSEUR AVEC UN CARTER DEUX VOLUTES ET AGENCEMENT DE VANNE POUR LA CONNECTION DES DEUX VOLUTES ET CONTRÔLE DE VANNE DE DÉCHARGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2016 DE 102016208163**

(43) Veröffentlichungstag der Anmeldung:
**20.03.2019 Patentblatt 2019/12**

(73) Patentinhaber: **Vitesco Technologies GmbH 30165 Hannover (DE)**

(72) Erfinder: **SPARRER, Christoph 93057 Regensburg (DE)**

(56) Entgegenhaltungen:
WO-A1-2013/135548  WO-A1-2013/139762
WO-A1-2015/009697  WO-A1-2016/094265
DE-U1-202014 009 873  US-A1- 2014 230 432

**Beschreibung**

Die Erfindung betrifft eine Turbine für einen Abgasturbolader mit zweiflutigem Turbinengehäuse und einem Linearventil zur Flutenverbindung und Wastegate-Steuerung.

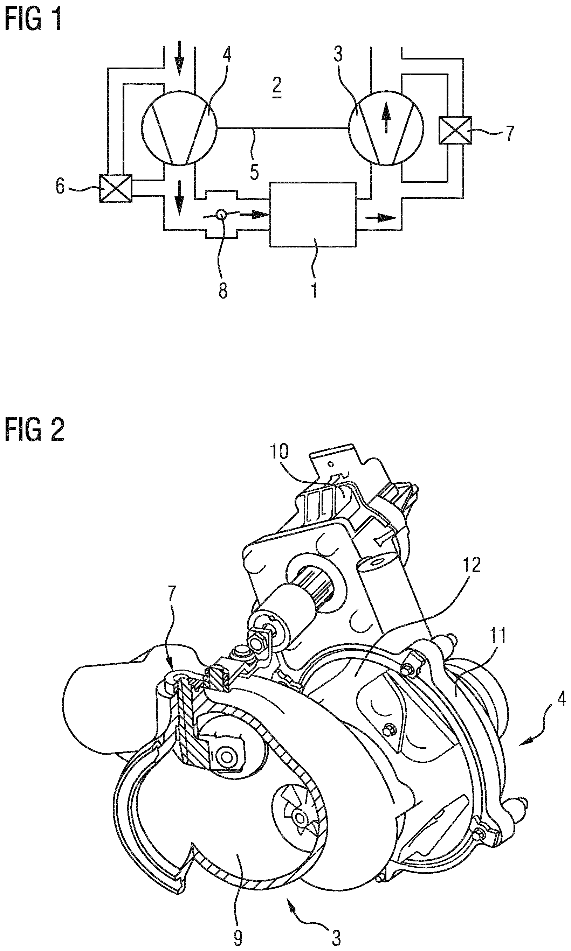

Ein Verbrennungsmotor 1, der von einem Abgasturbolader 2 aufgeladen wird, zeichnet sich durch die in der Figur 1 dargestellte Anordnung der Führung von Frischluft und Abgasen aus. Im aufgeladenen Betrieb strömt das Abgas aus dem Verbrennungsmotor 1 über die Turbine 3, welche den Verdichter 4 im Ansaugtrakt vor dem Einlass des Motors 1 über eine gemeinsame Welle 5 antreibt. Durch die Verdichtung der Ansaugluft kann mehr Kraftstoff pro Zylinderhub zugemischt werden und das Drehmoment des Motors 1 wird erhöht.

In der Figur 1 sind aus Gründen der Übersichtlichkeit einige Elemente der Luftführung nicht dargestellt. Dies sind zum Beispiel ein vor dem Verdichter angeordneter Luftfilter, ein vor dem Verdichter angeordneter Luftmengenmesser, ein hinter dem Verdichter angeordneter Ladeluftkühler, ein Tank, eine hinter der Drosselklappe angeordnete Kurbelgehäuse-Entlüftung und ein hinter der Turbine angeordneter Katalysator. Auf eine Darstellung einer gegebenenfalls vorhandenen Abgasrückführung oder Sekundärlufteinblasung wurde ebenfalls verzichtet.

Im aufgeladenen Betrieb ist die Drosselklappe 8 vollständig geöffnet. Die Regelung der Aufladung kann zum Beispiel durch Abblasen eines Teils des Abgasmassenstroms durch ein Wastegate-System 7 erfolgen. Auf der Verdichterseite ist desweiteren ein sogenanntes Schubumluft-System 6 angeordnet, über das überschüssige, verdichtete Ansaugluft abgeblasen und in den Ansaugtrakt zurückgeführt werden kann.

In der Fig. 2 ist eine mögliche Ausführungsform eines Abgasturboladers 2 nach dem Stand der Technik dargestellt. Diese Darstellung enthält einen Schnitt im Bereich des Wastegate-Systems. Das genannte Wastegate-System 7 ist im Turbinengehäuse 9 angeordnet. Das Wastegate-System 7 wird über einen Wastegate-Aktuator 10 betätigt, der unter Verwendung eines Halters am Verdichtergehäuse 11 befestigt ist. Zwischen dem Turbinengehäuse 9 und dem Verdichtergehäuse 11 befindet sich eine Rumpfgruppe 12, in welcher die gemeinsame Welle von Turbinenrad und Verdichterrad untergebracht ist.

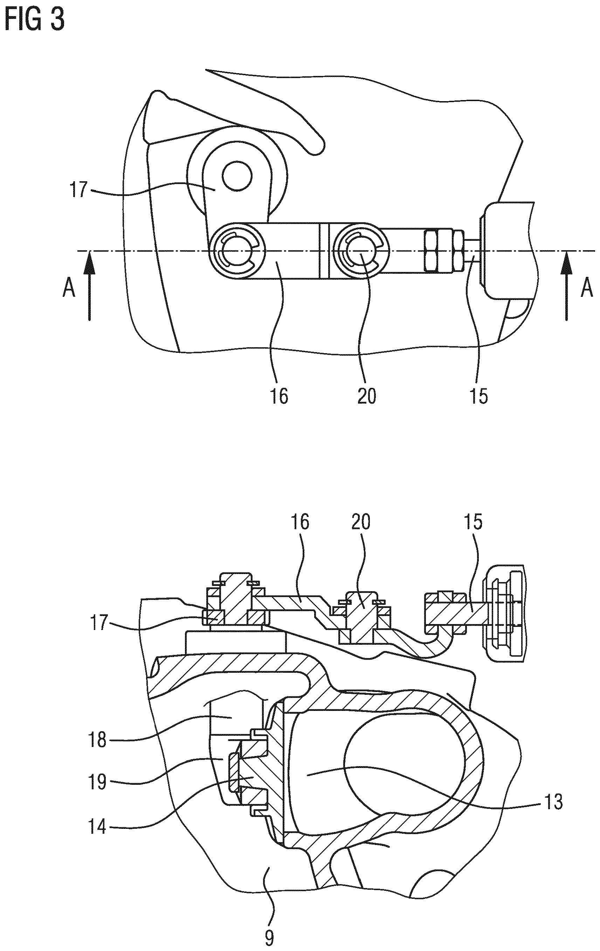

Die Figur 3 zeigt das Wastegate-System in einer Draufsicht sowie in einer Schnittdarstellung der Seitenansicht. Dargestellt ist die Wastegate-Öffnung 13 im Turbinengehäuse 9, die über einen Wastegate-Klappenteller 14 freigegeben oder verschlossen werden kann. So kann bei Bedarf ein Teil des Abgasmassenstroms am Turbinenrad vorbei geleitet werden. Die Öffnungs- bzw. Schließ-Betätigung der Klappe 14 erfolgt über eine Linearbewegung einer Regelstange 15, die von einem pneumatischen oder elektrischen Aktuator gesteuert wird. Diese Linearbewegung wird über eine Verbindungsplatte 16 an einen äußeren Wastegatehebel 17 übertragen. Die in einer Buchse 18 gelagerte Wastegatespindel 19 überträgt die Drehbewegung auf den Wastegate-Klappenteller 14. Aufgrund der linear geführten Regelstange 15 ist zusätzlich ein Ausgleichsgelenk 20 in der Kinematik erforderlich, um einen Schränkungsausgleich zu gewährleisten.

Eine weitere solche Wastegate-Ventilvorrichtung ist in Dokument WO 2013/139762 A1 offenbart, wobei ein Ventilteller mittels eines Antriebsstrangs mit einer Aktuatoreinrichtung verbunden ist. Hier wird insbesondere durch die Anordnung eines Dämpfungselements ein verringerter Verschleiß sowie eine verringerte Geräuschbildung angestrebt.

Eine alternative Ausführung eines Ventils an einem Abgasturbolader ist in Dokument WO 2013/135548 A1 anhand eines Schub-Umluftventils am Verdichter gezeigt. Hier ist das als Stößel bezeichnete Ventilelement mit einem sogenannten linearen Fortsatz verbunden, über den es in einer Linearbewegung also in einer geradlinigen Bewegung vom Ventilsitz abgehoben und somit das Ventil geöffnet wird.

Die vorstehenden Ausführungen beziehen sich auf Abgasturbolader mit einflutigem Turbinen- bzw. Verdichtergehäuse. Diese werden auch als Monoscroll-Turbinen bezeichnet. Diese Technologie hat den Nachteil, dass sich die einzelnen Zylinder des Verbrennungsmotors bei einem Ladungswechsel negativ beeinflussen. Dies wirkt sich nachteilig auf den Abgasgegendruck und den Gaswechsel des Motors aus, wodurch wiederum dessen Verbrauch, Ansprechverhalten und Nennleistung verschlechtert wird.

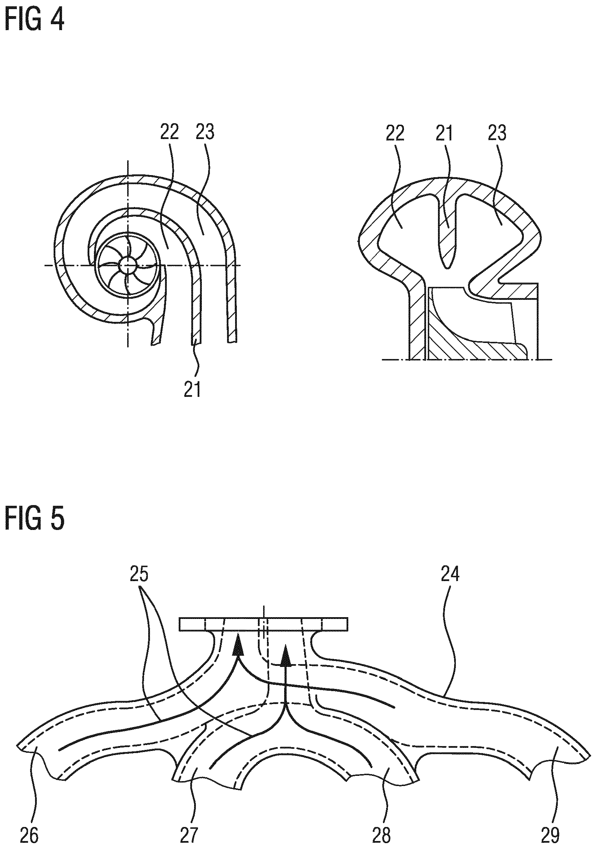

Um dieses Problem zu beheben werden zweiflutige Turbinengehäuse verwendet. Dabei unterscheidet man zwischen Segmented-Scroll-Turbinen und Twin-Scroll-Turbinen, wie es in der Figur 4 veranschaulicht ist.

Beide Turbinen enthalten eine Trennwand 21, die zwischen den beiden Fluten 22 und 23 vorgesehen ist. Bei der Segmented-Scroll-Turbine (linkes Bild) ist die Trennwand so angeordnet, dass das Rad von beiden Fluten auf je 180° über die volle Radeintrittsbreite beaufschlagt wird. Bei der Twin-Scroll-Turbine (rechtes Bild) ist die Trennwand in radialer Richtung zum Turbinenrad angeordnet, wodurch dieses von beiden Fluten auf 360° auf je 50% der Radeintrittsbreite beaufschlagt wird. Bei beiden Turbinen-Bauarten kommt, wie es aus der Figur 5 ersichtlich ist, ein Abgaskrümmer 24 zum Einsatz, bei dem bei Vierzylinder-Motoren jeweils zwei Zylinder und bei Sechszylinder-Motoren jeweils drei Zylinder zu einem Strang zusammengefasst sind. Jeder Strang ist wiederum mit einer Flut des zweiflutigen Turbinengehäuses verbunden. Dadurch wird gewährleistet, dass sich die Abgaspulse der einzelnen Zylinder möglichst wenig negativ beeinflussen. In der Figur 5 ist der Abgaskrümmer eines Vierzylinder-Motors veranschaulicht, bei welchem jeweils zwei Zylinder zu einem Strang zusammengefasst sind. So sind die Abgasleitungen 26 und 29 des ersten und vierten Zylinders zu einem Strang zusammengefasst. Des Weiteren sind die Abgasleitungen 27 und 28 des zweiten und dritten Zylinders zu einem Strang zusammengefasst. Die Abgasströme 25 sind durch entsprechende Pfeile gekennzeichnet.

Eine Ladedruckregelung bei Abgasturboladern mit zweiflutigen Turbinen erfolgt wie bei Monoscroll-Turbinen durch Abblasen von überschüssigen Abgasen über ein Wastegate-Ventil. Zu einer weiteren Reduzierung der Ladungswechselverluste bei Abgasturboladern mit zweiflutigen Turbinengehäusen ist eine schaltbare Flutenverbindung vorteilhaft. Dabei handelt es sich wie beim Wastegate-Ventil um ein Ventil, das bei Bedarf ein Überströmen von Abgas von Flute zu Flute ermöglicht. Die Verwendung eines zweiten Ventils wirkt sich allerdings nachteilig auf die Kosten und den Bauraum des Abgasturboladers aus.

Um diese Nachteile zu vermeiden ist es bereits bekannt, die Funktionalitäten von Wastegate und Flutenverbindung unter Verwendung eines einzigen Ventils zu realisieren.

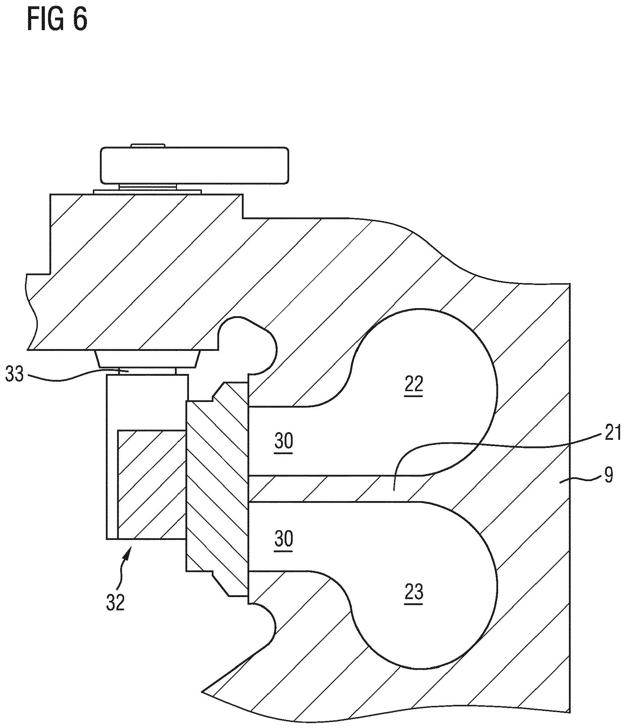

Eine mögliche Ausführungsform eines derartigen Wastegate-Ventils für eine zweiflutige Turbine ist in der Figur 6 dargestellt. Aus dieser Darstellung sind die beiden Fluten 22 und 23 des Turbinengehäuses 9 sowie die beiden Wastegate-Auslässe 30 ersichtlich. Sowohl die Fluten als auch die Wastegate-Auslässe sind durch eine Trennwand 21 voneinander getrennt. Somit können beide Fluten über ein gemeinsames Wastegate-Ventil 32 betätigt werden, wobei bei einer Öffnung des Wastegate-Ventils auch die beiden Fluten 22 und 23 über die Wastegate-Auslässe 30 fluidtechnisch miteinander verbunden werden. Zur Verstellung des Wastegate-Ventils ist ein Verstellarm 33 vorgesehen, welcher rotatorisch betätigt wird. Die Hauptfunktion dieser Ausführungsform ist eine Regulierung des Wastegate-Massenstroms beider Fluten mit einem Ventil.

Aus der DE 10 2013 002 894 A1 und DE 10 2010 008 411 A1 ist jeweils eine Turbine für einen Abgasturbolader bekannt, welche ein Turbinengehäuse aufweist, in welchem zwei von Abgas durchströmbare Fluten vorgesehen sind, und welches des Weiteren einen Umgehungskanal aufweist. Ferner ist jeweils ein Ventil vorgesehen, welches im geschlossenen Zustand sowohl die Flutenverbindung als auch den Umgehungskanal sperrt und im geöffneten Zustand sowohl die Flutenverbindung als auch den Umgehungskanal öffnet. Diese Ventile sind translatorisch oder rotatorisch bewegbar. Bei rotatorischer Betätigung weist das Ventil einen um einen Drehpunkt schwenkbaren Schwenkarm auf, an dessen Endbereich ein Klappenteller befestigt ist und der im Fall der DE 10 2013 002 894 A1 durch einen kugelsegmentförmigen Körper erweitert ist.

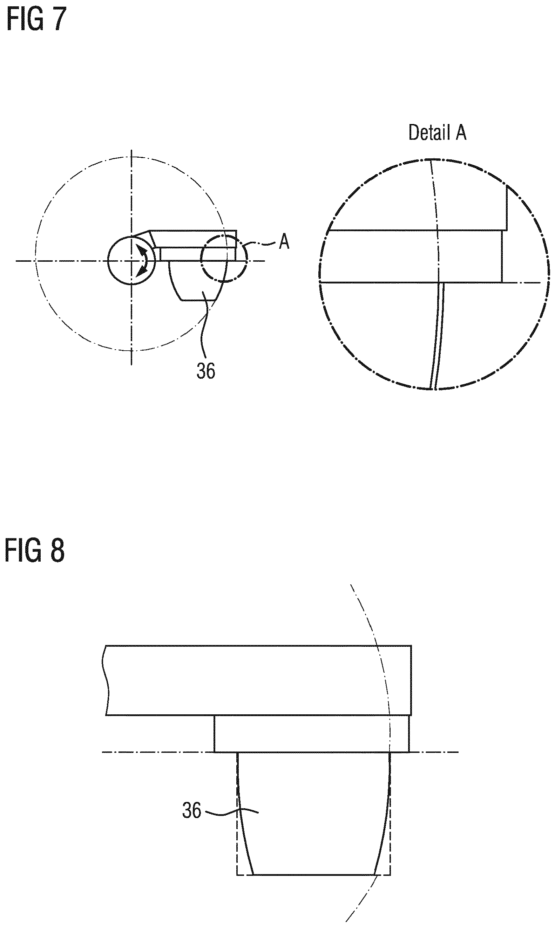

Bei Verwendung eines derartigen rotatorisch schwenkbaren Schwenkarmes besteht ein limitierter Freiheitsgrad bei der Gestaltung eines gegebenenfalls vorhandenen, in die Wastegate-Öffnung eintauchenden Ventilkörpers 36. Dies wird anhand der Figuren 7 und 8 erläutert, in welchen die Bewegung eines Ventilkörpers 36 veranschaulicht ist. Aus diesen Figuren ist ersichtlich, dass die Bewegung des Ventilkörpers 36 durch einen gestrichelt dargestellten Kreis limitiert ist. Folglich muss die Außenkontur des Ventilkörpers 36 derart gewählt werden, dass der Ventilkörper 36 bei seiner Bewegung die Kreislinie nicht nach außen überschreitet. Dies hat beispielsweise den Nachteil, dass die Form des Ventilkörpers 36 nicht zylinderförmig sein kann.

Im Fall der DE 10 2010 008 411 A1 ist in einem Ausführungsbeispiel zwischen den Fluten und dem Bypass ein translatorisch verstellbares Ventil vorgesehen, welches einen Schaft, einen Deckel und einen Klappenteller aufweist. In einer ersten Stellung dieses Ventils sind die Fluten fluidtechnisch voneinander getrennt und der Bypass geschlossen. In einer zweiten Stellung dieses Ventils sind die Fluten fluidtechnisch miteinander verbunden und der Bypass ist geschlossen. In einer dritten Stellung dieses Ventils sind die Fluten fluidtechnisch miteinander verbunden und der Bypass ist geöffnet. Die bekannten translatorisch betätigten Wastegate-Ventile haben den Nachteil, dass ein erforderlicher Betätigungsschaft auf einer bestimmten Länge im Gehäuse geführt werden muss, was in der Regel eine raumgreifende Konstruktion erforderlich macht.

Auch das Dokument DE 20 2014 009 873 U1 offenbart einen mehrflutigen Abgasturbolader mit einer ersten Flut und einer zweiten Flut, einer Bypassleitung für das Turbinenrad, einer Bypassventileinrichtung zur Einstellung der Größe eines Bypass-Abgasstroms durch die Bypassleitung und mit einer Flutenverbindungseinrichtung zur Einstellung eines Ausmaßes der Verbindung von Abgasströmen in den Fluten, wobei die Bypassventileinrichtung und die Flutenverbindungseinrichtung mittels einer Koppeleinrichtung mechanisch gekoppelt bzw. in einem speziell gestalteten Ventilelement zusammengefasst betätigbar sind.

Die Aufgabe der Erfindung besteht darin, eine Turbine für einen Abgasturbolader mit einem zweiflutigen Gehäuse und einem Linearventil anzugeben, dessen Arbeitsweise verbessert und dessen Platzbedarf verringert ist.

Diese Aufgabe wird durch eine Turbine mit den im Anspruch 1 abgegebenen Merkmalen gelöst. Vorteilhafte Ausgestaltungen und Weiterbildungen der Erfindung sind in den abhängigen Ansprüchen angegeben.

Demgemäß wird eine Turbine für einen Abgasturbolader vorgeschlagen mit einem Turbinengehäuse, welches zwei von einem Abgas durchströmbare Fluten aufweist, zwischen denen eine Trennwand vorgesehen ist. Die Turbine weist nur ein, als Linearventil ausgebildetes Wastegate-Ventil für beide Fluten auf, welches ein Linearventilelement zum Öffnen und Schließen von Wastegate-Auslässen der beiden Fluten hin zu einem gemeinsamen, außerhalb der Fluten angeordneten Auslassraum aufweist, wobei das Linearventilelement mit einem Verstellschaft, der eine Schaft-Längsachse aufweist, zur Betätigung des Linearventilelements verbunden ist. Die Turbine zeichnet sich dadurch aus, dass der Verstellschaft in Richtung einer durch die Trennwand aufgespannten Trennwandebene durch die Trennwand aus dem Turbinengehäuse heraus geführt ist und in Axialrichtung seiner Schaft-Längsachse in der Trennwand (21) beweglich geführt angeordnet ist, wobei das Linearventilelement aus Richtung des Auslasstrichters zum Verschließen der Wastegate-Auslässe gegen einen Ventilsitz geführt ist und mittels des Verstellschafts zur Öffnung der Wastegate-Auslässe in Axialrichtung, also in geradliniger Bewegung entlang der Schaft-Längsachse, in den Auslassraum hinein vom Ventilsitz abhebbar ist. In der Regel steht der Auslassraum mit einem Abgassystem zur Abführung des Abgases in direkter Verbindung.

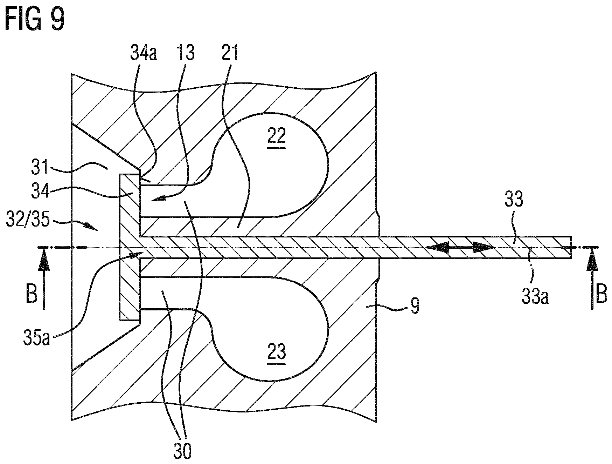

Die Vorteile einer Turbine mit den im Anspruch 1 angegebenen Merkmalen bestehen insbesondere darin, dass im Betrieb der Turbine aufgrund der Führung des Linearventilelements in der Trennwand zwischen den beiden Fluten eine exakte Führung des Linearventilelements bei gleichzeitig sehr platzsparender Anordnung gewährleistet ist. Durch die exakte Führung des Verstellarmes des Ventils innerhalb der Trennwand zwischen den beiden Fluten ist sichergestellt, dass der Ventilteller in einer ersten Ventilstellung exakt auf seinem Sitz aufliegt, so dass die Fluten zuverlässig und vollständig fluidtechnisch voneinander getrennt sind, und dass in der zweiten Ventilstellung das Ventil vollständig geöffnet ist. Der erheblich verringerte Platzbedarf wird dadurch erzielt, dass eine Führung des Linearventilelements zumindest teilweise innerhalb der bei zweiflutigen Turbinen ohnehin vorhandenen Trennwand des Turbinengehäuses erfolgt. Weitere vorteilhafte Weiterbildungen und Ausführungen einer Turbine mit den im Anspruch 1 angegebenen erfindungsgemäßen Merkmalen, gemäß der Unteransprüche, sind anhand der nachfolgenden Beschreibung von Ausführungsbeispielen der Erfindung anhand der Figuren 9 bis 27 ersichtlich. Es zeigt:

Figur 9  eine Schnittdarstellung zur Veranschaulichung eines ersten Ausführungsbeispiels für die Erfindung,

Figur 10  eine Schnittdarstellung zur Veranschaulichung eines zweiten Ausführungsbeispiels für die Erfindung,

Figur 11  eine weitere Schnittdarstellung des zweiten Ausführungsbeispiels entlang der in der Figur 10 gezeigten Schnittlinie B-B,

Figur 12  ein Diagramm zur Veranschaulichung eines ersten Beispiels für einen bevorzugten Querschnittsflächenverlauf von Wastegate-öffnungsquerschnitt und Flutenverbindungsquerschnitt,

Figur 13  ein Diagramm zur Veranschaulichung eines zweiten Beispiels für einen bevorzugten Querschnittsflächenverlauf von Wastegate-öffnungsquerschnitt und Flutenverbindungsquerschnitt,

Figur 14  eine perspektivische Darstellung eines Linearventilelements gemäß Figur 10 und 11,

Figur 15  Beispiele für unterschiedliche Geometrien eines Ventilkörpers eines Linearventilelements,

Figur 16  Beispiele für an ihrer Außenkontur modifizierte Ventilkörper eines Linearventilelements,

Figur 17  eine Schnittdarstellung zur Veranschaulichung eines dritten Ausführungsbeispiels für die Erfindung,

Figur 18  eine Schnittdarstellung zur Veranschaulichung eines Gesamtaufbaus eines Ausführungsbeispiels mit einem als Linearventil ausgebildeten Wastegate-Ventils,

Figur 19  eine Schnittdarstellung zur Veranschaulichung eines vierten Ausführungsbeispiels für die Erfindung,

Figur 20  eine weitere Schnittdarstellung des vierten Ausführungsbeispiels entlang der in der Figur 19 gezeigten Schnittlinie B-B,

Figur 21  eine perspektivische Darstellung eines weiteren Linearventilelements,

Figur 22  eine Darstellungen zur Veranschaulichung des Querschnittsflächenverlaufes des Flutenverbindungsquerschnitts in Abhängigkeit vom Ventil-Öffnungshub des Linearventilelements,

Figur 23  eine Schnittdarstellung zur Veranschaulichung eines fünften Ausführungsbeispiels für die Erfindung,

Figur 24  eine Schnittdarstellung zur Veranschaulichung eines sechsten Ausführungsbeispiels für die Erfindung,

Figur 25  eine Schnittdarstellung zur Veranschaulichung des sechsten Ausführungsbeispiels bei weiter geöffnetem Linearventil,

Figur 26  Darstellungen zur Veranschaulichung verschiedener Konturen im Bereich des Auslasstrichters des Wastegate-Ventils und

Figur 27    Beispiele für modifizierte Konturen des Turbinengehäuses im Bereich des Auslasstrichters des Wastegate-Ventils.

Funktions- und Benennungsgleiche Bauteile sind in den Figuren durchgehend mit den gleichen Bezugszeichen bezeichnet. Die dargestellten Gegenstände sind als Beispiele für unterschiedliche Ausführungen oder Weiterbildungen dieser zu verstehen.

Die vorliegende Erfindung stellt eine Turbine für einen Abgasturbolader bereit, welcher ein Turbinengehäuse aufweist, das zwei von einem Abgas durchströmbare Fluten enthält, zwischen denen eine Trennwand vorgesehen ist. Des Weiteren ist ein als Linearventil ausgebildetes Wastegate-Ventil vorgesehen, welches ein Linearventilelement aufweist. Das Linearventilelement ist mit einem Verstellschaft 33, der eine Schaft-Längsachse 33a aufweist, zur Betätigung des Linearventilelements 35a verbunden. Der Verstellschaft 33 ist in Richtung einer durch die Trennwand aufgespannten Trennwandebene durch die Trennwand 21 aus dem Turbinengehäuse 9 heraus geführt und in Axialrichtung seiner Schaft-Längsachse 33a in der Trennwand 21 beweglich geführt angeordnet. Das Linearventilelement 35a ist aus Richtung des Auslassraumes 31, also von außerhalb der Fluten 22, 23, zum Verschließen der Wastegate-Auslässe 30 gegen einen Ventilsitz 34a geführt und kann mittels des Verstellschafts 33 zur Öffnung der Wastegate-Auslässe 30 in Axialrichtung der Schaft-Längsachse 33a in den Auslassraum 31 hinein vom Ventilsitz abgehoben werden. Dabei soll hier und im Weiteren unter dem Begriff Linearventil ein Ventil verstanden werden, das insbesondere dadurch gekennzeichnet ist, dass das Ventilelement, hier deshalb als Linearventilelement bezeichnet, eine geradlinige translatorische Stellbewegung vorgibt.

Die Figur 9 zeigt eine Schnittdarstellung zur Veranschaulichung eines ersten Ausführungsbeispiels für die Erfindung. Bei diesem ersten Ausführungsbeispiel sind im Turbinengehäuse 9 zwei von einem Abgas durchströmbare Fluten 22 und 23 vorgesehen. Zwischen diesen beiden Fluten befindet sich eine Trennwand 21. Des Weiteren sind im Turbinengehäuse 9 je ein Wastegate-Auslass 30 für jede Flute vorgesehen, die in einer gemeinsamen Wastegate-Öffnung zusammengefasst sind und in einen Auslassraum 31 münden. Das Wastegate-Ventil 32 ist als Linearventil 35 ausgeführt, das ein Linearventilelement 35a aufweist. Bei dem gezeigten Ausführungsbeispiel ist ein das Wastegate-Ventil 32 wahlweise verschließendes oder öffnendes Linearventilelement 35a vorgesehen. Zu diesem Linearventilelement 35a gehören ein scheibenförmig ausgebildeter Ventilteller 34 und ein mit diesem fest verbundener oder einstückig ausgebildeter Verstellschaft 33. Dieser Verstellschaft 33 ist in der Trennwandebene durch die und in der Trennwand 21 des Turbinengehäuses 9 aus dem Turbinengehäuse 9 heraus geführt und ist innerhalb dieser Trennwand 21 in seiner Axialrichtung, also in geradliniger Bewegung entlang der Schaft-Längsachse 33a beweglich geführt, wie es durch den bidirektionalen Pfeil in der Figur 9 veranschaulicht ist.

In der Figur 9 ist ein als Linearventil 35 ausgeführtes Wastegate-Ventil 32 in seiner geschlossenen Position dargestellt, in welcher die beiden Fluten 22 und 23 fluidtechnisch voneinander getrennt sind und die in den Auslassraum 31 mündende Wastegate-Öffnung 13 und somit die Wastegate-Auslässe 30 geschlossen sind.

Wird der Verstellschaft 33 durch einen hier nicht dargestellten Wastegate-Aktuator in der Figur 9 nach links bewegt, dann wird auch der mit dem Verstellschaft 33 fest verbundene Ventilteller 34 nach links bewegt, so dass dieser in den Auslassraum 31 hinein vom Ventilsitz 34a abgehoben und die Wastegate-Öffnung 13, und damit das Wastegate-Ventil 32 geöffnet wird. In dieser geöffneten Position des Wastegate-Ventils 32 sind die beiden Fluten 22 und 23 fluidtechnisch über den Auslassraum 31 miteinander verbunden und die beiden Wastegate-Auslässe 30 geöffnet. Folglich strömt ein Teil des Abgases durch das in den Auslassraum 31 mündende Wastegate-Ventil 32 am Turbinenrad vorbei.

Demnach wird bei dem in der Figur 9 gezeigten Ausführungsbeispiel die fluidtechnische Verbindung der beiden Fluten 22, 23 und die Öffnung des Wastegate-Ventils 32 nicht rotatorisch unter Verwendung einer Klappe, sondern translatorisch unter Verwendung eines Linearventils 35, bei dem es sich um einen Linearschieber handelt, herbeigeführt. Dabei wird der Verstellschaft 33 dieses Linearventils 35 zentrisch zu den Wastegate-Auslässen 30 durch die Trennwand 21 zwischen den beiden Fluten 22 und 23 und den beiden Wastegate-Auslässen 30 und aus dem Turbinengehäuse 9 heraus geführt. Vorzugsweise verläuft die Bohrung, durch welche der Verstellschaft 33 geführt ist, in der Trennwandebene mittig durch die Trennwand 21. Diese Führung des Verstellschaftes 33 in der Trennwand 21 gewährleistet eine sichere Führung des Verstellschaftes 33 und ermöglicht eine weitestgehend spielfreie Einstellung sowohl der geschlossenen Position des Linearventils 35 als auch ein gleichmäßiges Öffnen dieses Linearventils 35, wobei die in der geschlossenen Position auf dem Ventilsitz 34a aufliegenden Bereiche des Ventiltellers 34 gleichzeitig und damit spielfrei vom Ventilsitz 34a abgehoben werden.

Zusammenfassend betrachtet wird in Figur 9 eine Turbine 3 für einen Abgasturbolader 2 offenbart wie oben beschrieben, die dadurch gekennzeichnet ist, dass das Wastegate-Ventil 32 nur eine Wastegate-Öffnung 13 aufweist, in der die Wastegate-Auslässe 30 der beiden Fluten 22, 23 zusammengefasst sind, wobei die Wastegate-Öffnung 13 in einer ersten Ventilstellung durch das Linearventilelement 35a geschlossen ist und zumindest in einer zweiten Ventilstellung des Linearventilelements 35a geöffnet ist. Dabei ist das Linearventilelement 35a mit einem Verstellschaft 33 verbunden, der in Richtung der Trennwandebene durch die Trennwand 21 aus dem Turbinengehäuse 9 geführt und in Axialrichtung beweglich ist. Das Linearventilelement 35a ist dabei aus Richtung des Auslassraumes 31 gegen einen Ventilsitz 34a geführt und zur Öffnung der Wastegate-Auslässe 30 in Axialrichtung in den Auslassraum 31 hinein vom Ventilsitz abhebbar.

Wobei die genannte Turbine weiterhin dadurch gekennzeichnet ist, dass das Linearventilelement 35a in der ersten Ventilstellung, wenn das Wastegate-Ventil 32 geschlossen ist, auch die beiden Fluten 22, 23 fluidtechnisch voneinander getrennt hält, und zumindest eine weitere Ventilstellung aufweist, in welcher eine fluidtechnische Verbindung der beiden Fluten 22, 23 miteinander, hier beispielsweise über den Auslassraum 31, durch das Linearventilelement 35a freigegeben ist.

Desweiteren ist die genannte Turbine dadurch gekennzeichnet, dass das Linearventilelement 35a zumindest einen Ventilteller 34, der zum Verschließen der Wastegate-Öffnung 13 durch dichte Auflage des Ventiltellers 34 auf einem die Wastegate-Öffnung 13 umgebenden Ventilsitz 34a und einen Verstellschaft 33 zur Betätigung des Linearventilelements 35a durch Axialverschiebung aufweist, wobei der Ventilteller aus Richtung des Auslassraumes 31 gegen den Ventilsitz 34a geführt ist.

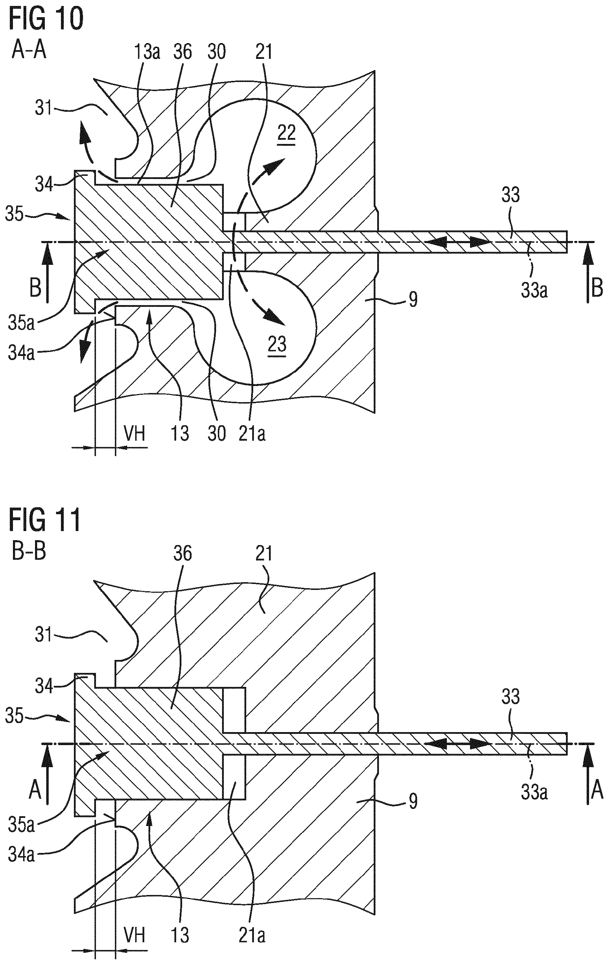

Die Figur 10 zeigt eine Schnittdarstellung durch die Ventilanordnung quer zum Verlauf der Fluten 22, 23, zur Veranschaulichung eines weiteren Ausführungsbeispiels der erfindungsgemäßen Turbine. Auch bei diesem Ausführungsbeispiel sind im Turbinengehäuse 9 zwei von einem Abgas durchströmbare Fluten 22 und 23 vorgesehen. Zwischen diesen beiden Fluten befindet sich eine Trennwand 21, die eine Trennwandausnehmung 21a zur Aufnahme eines Ventilkörpers 36 aufweist. Des Weiteren sind im Turbinengehäuse 9 Wastegate-Auslässe 30 vorgesehen, die im Bereich der Trennwandausnehmung 21a der Trennwand 21 in eine gemeinsame Wastegate-Öffnung 13 übergehen und so in dieser zusammengefasst sind. Ferner ist auch bei diesem Ausführungsbeispiel ein Linearventil 35 mit einem Linearventilelement 35a vorgesehen. Zu dem Linearventilelement 35a gehören ein Ventilteller 34, ein Verstellschaft 33 und ein zwischen dem Ventilteller 34 und dem Verstellschaft 33 in einer Trennwandausnehmung 21a der Trennwand 21 und zugleich zentrisch in der Wastegate-Öffnung 13 angeordneter Ventilkörper 36. Dabei ist ein Wastegate-Öffnungsquerschnitt, das heißt ein freigegebene Querschnitt, durch den Abgas aus der Wastegate-Öffnung 13 abfließen kann, durch einen zwischen Außenumfang des Ventilkörpers 36 und Innenumfang der Wastegate-Öffnung 13 ausgebildeten Ventilspalt 13a bestimmt. Zugleich ist ein Flutenverbindungsquerschnitt, das heißt ein freigegebener Querschnitt der Flutenverbindung, durch den Abgas zwischen den Fluten ausgetauscht werden kann, durch die vom Ventil-Öffnungshub VH abhängige Freigabe der Trennwandausnehmung 21a durch den Ventilkörper 36 bestimmt.

Der Verstellschaft 33 ist durch die Trennwand 21 des Turbinengehäuses 9 geführt und ist innerhalb dieser Trennwand 21 in seiner Axialrichtung bewegbar, wie es durch den bidirektionalen Pfeil in der Figur 10 veranschaulicht ist. Der sich quer zur Schaft-Längsachse 33a des Verstellschafts 33 erstreckende Durchmesser des Ventilkörpers 36 ist größer als der Durchmesser des Verstellschafts 33, und zugleich kleiner als der sich ebenfalls quer zur Schaft-Längsachse 33a erstreckende Querschnitt des Ventiltellers 34.

Der Ventilteller 34, der Ventilkörper 36 und der Verstellschaft 33 können in Form eines einstückig integrierten Linearventilelements 35a realisiert sein. Alternativ dazu kann es sich bei den genannten Bauteilen auch um Einzelbauteile handeln, die montagetechnisch, beispielsweise durch Verschweißen, miteinander verbunden sind.

Der Ventilkörper 36 ist in diesem Beispiel zylindrisch mit gleichbleibendem Durchmesser ausgeführt, weist einen kleineren Durchmesser auf als die Wastegate-Öffnung 13 in der er angeordnet ist und erstreckt sich in der Wastegate-Öffnung 13 und der Trennwandausnehmung 21a der Trennwand 21 über eine vorgegebene, bestimmte axiale Länge, so dass zwischen Ventilkörper 36 und Wastegate-Öffnung 13 ein Ventilspalt 13a ausgebildet ist.

Zugleich ist die Ausnehmung 21a der Trennwand 21 so ausgebildet, dass sie entlang der Längsseite des Ventilkörpers 36 möglichst dicht abschließt, wie in Figur 11, die eine Schnittdarstellung der Ventilanordnung in Richtung der Trennwand zeigt, ersichtlich wird.

Im geschlossenen Zustand des Linearventils 35 (nicht dargestellt) sitzt der Ventilteller 34 auf dem die Wastegate-Öffnung 13 umgebenden Ventilsitz 34a auf und schließt so die Wastegate-Öffnung 13 und somit die Wastegate-Auslässe 30 der beiden Fluten 22, 23 dicht ab. Gleichzeitig ist die axiale Erstreckung des Ventilkörpers 36 so festgelegt, dass dieser auf seiner dem Verstellschaft 33 zugewandten Stirnseite auf dem Grund der Ausnehmung 21a in der Trennwand 21 aufsitzt und so die Ausnehmung 21a verschließt und die beiden Fluten 22, 23 voneinander trennt.

Diese Ausführung ist besonders vorteilhaft, da bei einem Öffnen des Linearventils, also beim Abheben des Ventiltellers 34 vom Ventilsitz 34a, zunächst nur der Ventilspalt 13a, als vorgegebener kleiner Wastegate-Öffnungsquerschnitt, freigegeben wird. Bei einem weiteren Öffnen des Linearventils bleibt der freigegebene Wastegate-Öffnungsquerschnitt aufgrund der axialen Erstreckung des Ventilkörpers 36 bei gleichbleibendem Querschnitt des Ventilspalts 13a zwischen der Wastegate-Öffnung 13 des Turbinengehäuses 9 und dem Ventilkörper 36 zunächst konstant. Erst wenn der Ventilkörper 36 vollständig, also über seine axiale Erstreckung hinaus, aus der Wastegate-Öffnung 13 des Turbinengehäuses 9 hinausgeschoben ist, wird der freigegebene Wastegate-Querschnitt sprunghaft vergrößert.

Mit dem Abheben des Ventiltellers 34 vom Ventilsitz 34a wird auch am Grund der Ausnehmung 21a ein Flutenverbindungsquerschnitt geöffnet. Der Flutenverbindungsquerschnitts steigt mit dem Öffnungshub des Linearventils linear an.

Eine weitere Ausführung der erfindungsgemäßen Turbine ist dadurch gekennzeichnet, dass der Ventilkörper 36 derart ausgebildet ist, dass ausgehend von der ersten, geschlossenen Ventilstellung des Linearventilelements 35a, bei einem kontinuierlich ansteigenden Ventil-Öffnungshub VH des Linearventilelements 35a, mittels Axialverschiebung des Verstellschaftes 33, der Wastegate-Öffnungsquerschnitt zunächst linear erhöht wird, dann über eine bestimmte Strecke des Ventil-Öffnungshubes VH konstant gehalten wird und dann erneut linear erhöht wird, bis eine Ventil-Endstellung erreicht ist.

In Weiterführung des vorgenannten Ausführungsbeispiels ist die Turbine dadurch gekennzeichnet, dass der Ventilkörper 36 derart ausgebildet ist, dass ausgehend von der ersten, geschlossenen Ventilstellung des Linearventilelements 35a, bei einem kontinuierlich ansteigenden Ventil-Öffnungshub VH des Linearventilelements 35, mittels Axialverschiebung des Verstellschaftes 33, der Flutenverbindungsquerschnitt durchgehend kontinuierlich erhöht wird, bis ein maximaler Flutenverbindungsquerschnitt erreicht ist und dann konstant bleibt, bis eine Ventil-Endstellung erreicht ist.

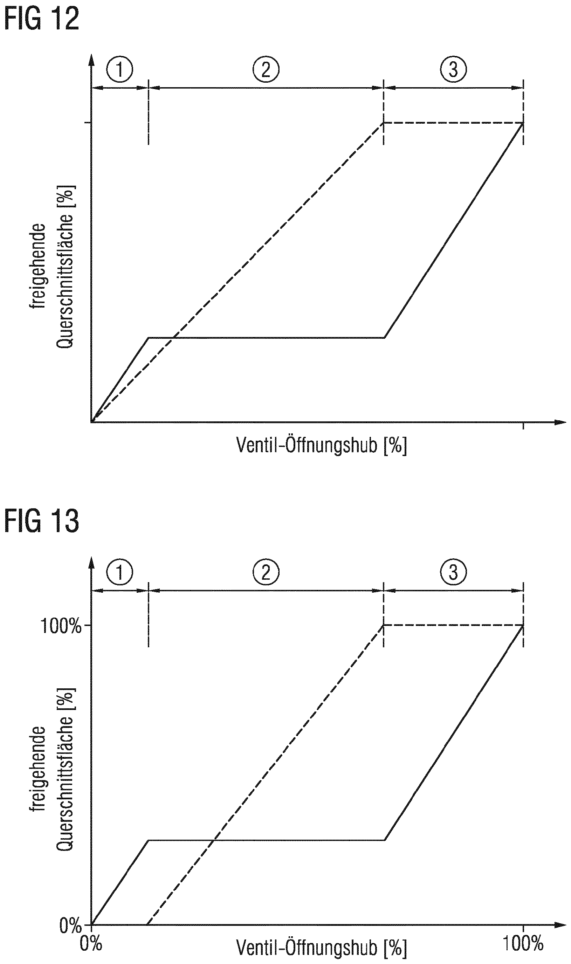

Ein mit der vorgenannten Anordnung angestrebter Flächenverlauf von freigegebenen Querschnittsflächen des Wastegate-Öffnungsquerschnitts und des Flutenverbindungsquerschnitts in Relation zum Ventil-Öffnungshub ist in der Figur 12 dargestellt. Diese zeigt ein Diagramm zur Veranschaulichung eines ersten Beispiels für einen bevorzugten Querschnittsflächen-Verlauf über dem Ventil-Öffnungshub von freigegebenem Wastegate-Öffnungsquerschnitt und Flutenverbindungsquerschnitt. Dabei ist nach oben die freigegebene Querschnittsfläche und nach rechts der Ventil-Öffnungshub des Linearventils aufgetragen.

Der in der Figur 12 gezeigte gestrichelte Verlauf zeigt den Flutenverbindungsquerschnitt und veranschaulicht, dass der Flutenverbindungsquerschnitt mit zunehmender Öffnung des Linearventils 35 linear zunimmt, bis der maximale Öffnungsquerschnitt erreicht ist und dann konstant bleibt, bis das Linearventil 35 vollständig geöffnet ist.

Der in der Figur 12 mit einer durchgezogenen Linie gezeichnete Verlauf zeigt den Wastegate-Öffnungsquerschnitt und veranschaulicht, dass der Wastegate-Öffnungsquerschnitt sich in drei Bereiche aufteilt. Bei nur kleinem Öffnungshub des Linearventilelements 35a, wie sie in einem Bereich 1 vorliegt, gibt das Linearventil 35 möglichst rasch einen kleinen Wastegate-Öffnungsquerschnitt frei, der aber größer ausfällt als die freigegebene Fläche an der Flutenverbindung. In diesem Bereich erfolgt die Erhöhung des freigegebenen Wastegate-Öffnungsquerschnitts linear. Diese Konstellation ist vor allem bei niedrigen Motordrehzahlen und hohen Motorlasten vorteilhaft. Hier steht der Turbine nur ein geringer Abgasmassenstrom zur Verfügung. Trotzdem muss der Verdichter hohe Ladedrücke bereitstellen, was eine hohe Turbinenleistung erfordert. Durch die nahezu vollständige Flutentrennung kann trotz niedriger Abgasmengen ein hoher Druck vor der Turbine aufgestaut werden. So kann die nötige Energie für den Verdichter bereitgestellt werden. Zudem ermöglicht die Flutentrennung bei niedrigen Motordrehzahlen einen effizienten Betrieb des Verbrennungsmotors durch optimale Trennung der Zylinder des Verbrennungsmotors und somit niedrige Restgasanteile. Wird zur Ladedruckregelung das Linearventil des Wastegates weiter geöffnet, dann bleibt die Flutentrennung durch den dominanteren Anstieg des Wastegate-Öffnungsquerschnitts im Bereich 1 nahezu erhalten.

Beim weiteren Öffnen des Linearventils 35, wie es in der Figur 12 im Bereich 2 vorliegt, wird der freigegebene Wastegate-Öffnungsquerschnitt konstant gehalten. Dies ist vor allem im mittleren Motordrehzahlbereich und hohen Motorlasten vorteilhaft. So kann der Grad des Flutenverbindungsquerschnitts optimal an die Motorbedürfnisse angepasst werden. Erst dann, wenn der Flutenverbindungsquerschnitt vollständig freigegeben ist, d. h. in dem in der Figur 12 gezeigten Bereich 3, erfolgt eine linear verlaufende weitere Erhöhung des Wastegate-Öffnungsquerschnitts solange, bis das Linearventil 35 vollständig geöffnet ist. Dies ist vor allem bei hohen Motordrehzahlen und hohen Motorlasten vorteilhaft. Durch die hohen Leistungen, die hier am Turbolader umgesetzt werden müssen, ist ein möglichst hoher Turbinenwirkungsgrad essentiell. Dies wird durch die Flutenverbindung ermöglicht. So kann möglichst viel Abgasmassenstrom über die Turbine geführt werden ohne dass der Abgasgegendruck vor der Turbine die zulässigen Grenzen überschreitet. Die Einstellung der Turbinenleistung kann wie gewohnt über das Wastegate-Ventil realisiert werden, da sich der Flutenverbindungsquerschnitt in diesem Bereich nicht mehr ändert.

Die Figur 13 zeigt ein Diagramm zur Veranschaulichung eines zweiten Beispiels für einen bevorzugten Querschnittsflächenverlauf von Wastegate-Öffnungsquerschnitt und Flutenverbindungsquerschnitt.

Auch bei diesem zweiten Beispiel ist nach oben die freigegebene Querschnittsfläche und nach rechts der Ventil-Öffungshub des Linearventilelements 35a aufgetragen.

Der in der Figur 13 gezeigte gestrichelte Verlauf veranschaulicht, dass der Flutenverbindungsquerschnitt erst verzögert freigegeben wird, dann mit zunehmender Öffnung des Linearventils 35 linear zunimmt, bis der maximale Flutenverbindungsquerschnitt erreicht ist, und schließlich konstant bleibt, bis das Linearventil 35 vollständig geöffnet ist.

Der in der Figur 13 mit einer durchgezogenen Linie gezeichnete Verlauf veranschaulicht, dass der Wastegate-Öffnungsquerschnit mit dem in der Figur 12 gezeigten Verlauf übereinstimmt. Er teilt sich in drei Bereiche auf. Bei nur kleiner Öffnung des Linearventils 35, wie sie im Bereich 1 vorliegt, gibt das Linearventil 35 möglichst rasch einen kleinen Wastegate-Öffnungsquerschnitt frei, wobei in diesem Bereich die Erhöhung des freigegebenen Wastegate-Öffnungsquerschnitts linear erfolgt.

Diese Konstellation ist vor allem bei niedrigen Motordrehzahlen und hohen Motorlasten vorteilhaft. Hier steht der Turbine nur ein geringer Abgasmassenstrom zur Verfügung. Trotzdem muss der Verdichter hohe Ladedrücke bereitstellen, was eine hohe Turbinenleistung erfordert. Durch die vollständige Flutentrennung kann trotz niedriger Abgasmengen ein hoher Druck vor der Turbine aufgestaut werden. So kann die nötige Energie für den Verdichter bereitgestellt werden. Zudem ermöglicht die vollständige Flutentrennung bei niedrigen Motordrehzahlen einen effizienten Betrieb des Verbrennungsmotors durch optimale Trennung der Zylinder des Verbrennungsmotors und somit niedrige Restgasanteile. Wird zur Ladedruckregelung das Linearventil 35 des Wastegate-Ventils weiter geöffnet, bleibt die Flutentrennung durch den verzögerten Anstieg des Flutenverbindungsquerschnitts im Bereich 1 erhalten.

Beim weiteren Öffnen des Linearventils 35, wie es in der Figur 13 im Bereich 2 vorliegt, wird der freigegebene Wastegate-Öffnungsquerschnitt konstant gehalten. Dies ist vor allem im mittleren Motordrehzahlbereich und hohen Motorlasten vorteilhaft. So kann der Grad der der Flutenverbindung optimal an die Motorbedürfnisse angepasst werden.

Erst dann, wenn der Flutenverbindungsquerschnitt vollständig freigegeben ist, d.h. in dem in der Figur 13 gezeigten Bereich 3, erfolgt eine linear verlaufende weitere Erhöhung des Wastegate-Öffnungsquerschnitts solange, bis das Linearventil 35 vollständig geöffnet ist.

Dies ist, wie bereits zu Figur 12 erläutert vor allem bei hohen Motordrehzahlen und hohen Motorlasten vorteilhaft.

Um einen Querschnittsflächenverlauf, wie er in der Figur 13 veranschaulicht ist, zu ermöglichen, wird vorzugsweise eine Modifikation des in der Figur 10 und 11 gezeigten zylinderförmigen Ventilkörpers 36 vorgenommen.

Eine entsprechend ausgelegte Turbine ist dadurch gekennzeichnet, dass die kontinuierliche Erhöhung des Flutenverbindungsquerschnitts erst nach Überschreitung eines vorgegebenen Ventil-Öffnungshubes VH, also verzögert gegenüber der Öffnung des Wastegate-Öffnungsquerschnitts, beginnt.

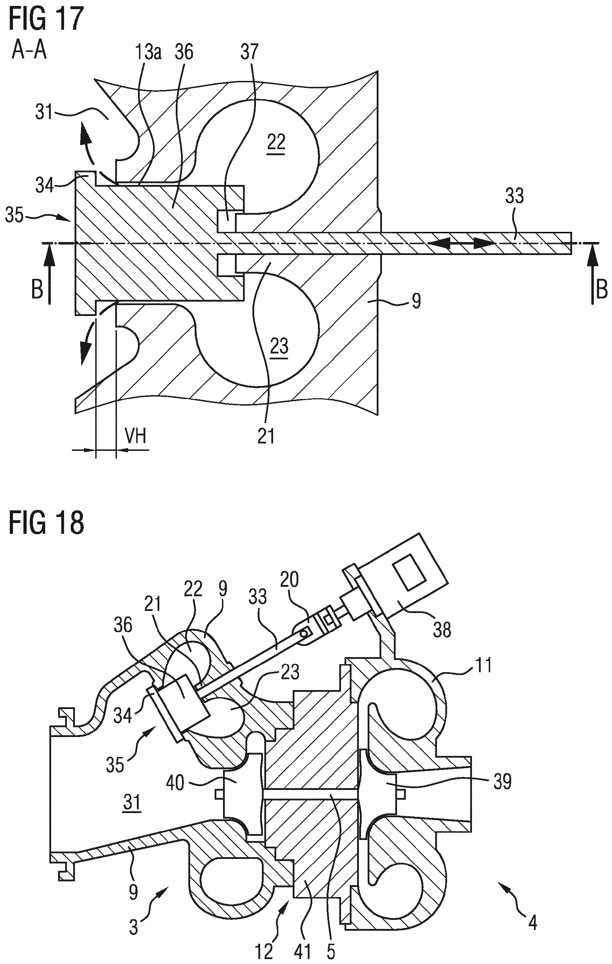

Dies ist in der Figur 17 gezeigt, welche eine Schnittdarstellung wie in Figur 10 zur Veranschaulichung eines weiteren Ausführungsbeispiels für die Erfindung offenbart. Bei diesem Ausführungsbeispiel weist der Ventilkörper 36 in seinem der Trennwand 21 zugewandten Endbereich eine nutförmige Ausnehmung 37 auf, in welche in der geschlossenen Position des Linearventils die Trennwand 21 eingreift, so dass es über einem begrenzten Hubbereich des Linearventilelements zu einer Überdeckung der Trennwand 21 mit der nutförmigen Ausnehmung 37 kommt, so dass beim Öffnen des Linearventils der Flutenverbindungsquerschnitt erst nach Überschreitung eines vorgegebenen Ventil-Öffnungshubes VH, also verzögert gegenüber der Öffnung des Wastegate-Öffnungsquerschnitts freigegeben und kontinuierlich erhöht wird.

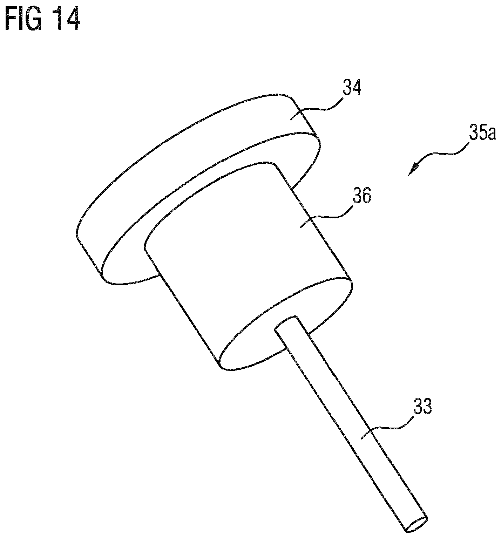

Die Figur 14 zeigt eine perspektivische Darstellung eines Linearventilelements 35a, mittels welchem der in der Figur 12 veranschaulichte Verlauf der freigegebenen Öffnungsquerschnitte erzielbar ist. Dieses Linearventilelement 35a stimmt mit dem in der Figur 10 gezeigten Linearventilelement 35a weitgehend überein. Es weist einen Verstellschaft 33, einen zylindrischen Ventilkörper 36 und einen Ventilteller 34 auf.

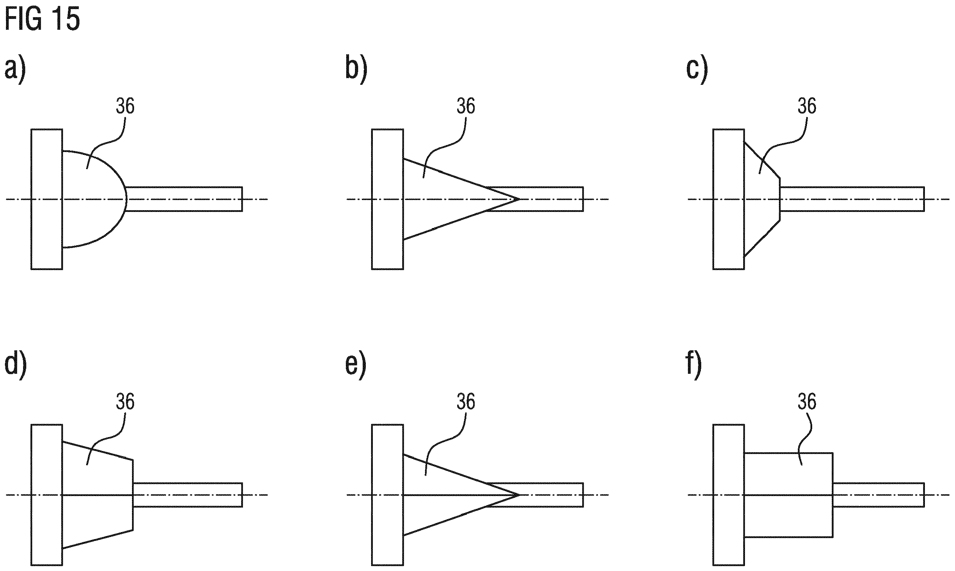

Die Figur 15 zeigt weitere Beispiele für Linearventilelemente, mittels welchen ähnliche oder auch zu den in der Figur 12 gezeigten Öffnungsverläufen unterschiedliche Öffnungsverläufe erzielbar sind. Bei diesen weiteren Beispielen ist der Ventilkörper 36 anders geformt als bei dem in der Figur 14 gezeigten Ausführungsbeispiel. Die Figur 15a zeigt ein Linearventilelement, bei welchem der Ventilkörper 36 mit einem ellipsenförmigen Querschnitt ausgebildet ist. Die Figur 15b zeigt ein Linearventilelement, bei welchem der Ventilkörper 36 kegelförmig ausgebildet ist. Die Figur 15c zeigt ein Linearventilelement, bei welchem der Ventilkörper 36 kegelstumpfförmig ausgebildet ist. Die Figur 15d zeigt ein Linearventilelement, bei welchem der Ventilkörper 36 pyramidenstumpfförmig ausgebildet ist. Die Figur 15e zeigt ein Linearventilelement, bei welchem der Ventilkörper 36 pyramidenförmig ausgebildet ist. Die Figur 15f zeigt ein Linearventilelement, bei welchem der Ventilkörper 36 quaderförmig ausgebildet ist.

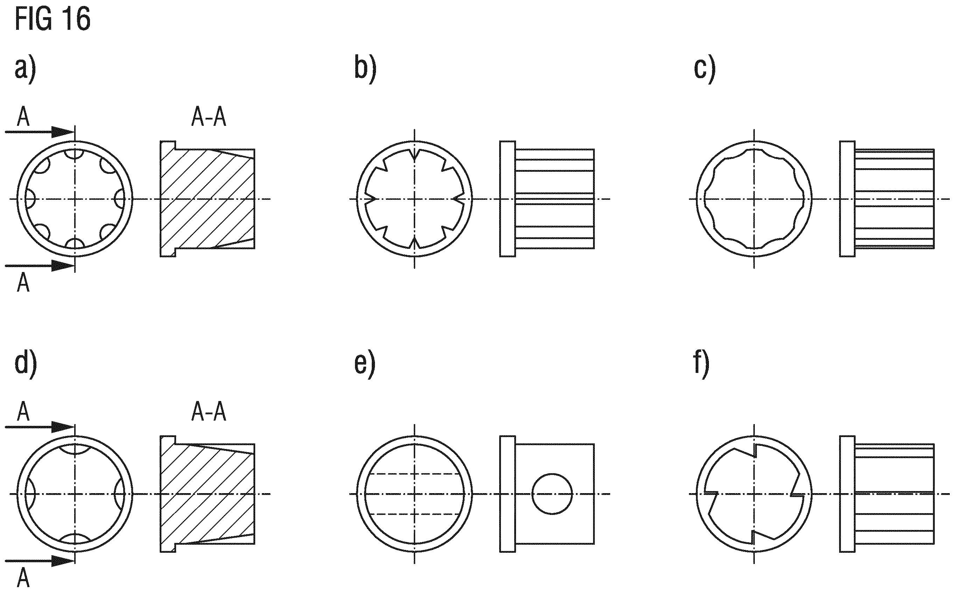

Die Figur 16 zeigt Beispiele für modifizierte Linearventilelemente, bei denen der jeweilige Ventilkörper 36 zwecks Feinjustierung des Durchflussverhaltens kleine Modifikationen am Außenumfang aufweist. Diese Modifikationen dienen zur Vergrößerung oder Anpassung der freigegebenen Querschnittsfläche zwischen Ventilkörper und Wastegate-Öffnung in dem in den Figuren 12 und 13 gekennzeichneten Öffnungsbereich 2 des Linearventils.

Die Figur 16a veranschaulicht Modifikationen in Form von halbrunden, in axialer Richtung verlaufenden, über den Umfang des Ventilkörpers 36 verteilten Einkerbungen. Die Figur 16b zeigt Modifikationen in Form von keilförmigen in axialer Richtung verlaufenden, über den Umfang des Ventilkörpers 36 verteilten Einkerbungen. Die Figur 16c zeigt Modifikationen in Form von bogenförmigen in axialer Richtung verlaufenden, über den Umfang des Ventilkörpers 36 verteilten Ausfräsungen. Die Figur 16d zeigt Modifikationen in Form von halbelliptischen in axialer Richtung verlaufenden, über den Umfang des Ventilkörpers 36 verteilten Ausnehmungen. Die Figur 16e zeigt Modifikationen bei denen der Ventilkörper als Hohlzylinder ausgebildet und mit einer senkrecht zur Ventilkörperachse verlaufenden Durchgangsbohrung ausgestattet ist. Die Figur 16f zeigt Modifikationen in Form von sägezahnförmigen in axialer Richtung verlaufenden, über den Umfang des Ventilkörpers 36 verteilten Einkerbungen.

Die Modifikationen der Ventilkörper gemäß der Figuren 16 a), b), c), d) und f) können sich in gleicher Tiefe über die gesamte oder nur einen Teil der axialen Länge des Ventilkörpers erstrecken. Auch Modifikationen mit Einkerbungen, Ausnehmungen oder Ausfräsungen, deren Tiefe sich über die axiale Erstreckung hinweg verändert können vorgesehen werden.

Die zu einer Veränderung der Öffnungsposition des Linearventils 35 notwendige Verstellung des Verstellschafts 33 erfolgt beispielsweise unter Verwendung eines Linearaktuators 38 und eines Ausgleichsgelenkes 20. Dies ist in der Figur 18 veranschaulicht. Diese zeigt eine vereinfachte Schnittdarstellung durch einen Abgasturbolader mit einem erfindungsgemäßen, als Linearventil 35 ausgeführten, Wastegate-Ventils, zur Veranschaulichung eines Ausführungsbeispiels für die Ansteuerung des Linearventils 35.

Aus dieser Schnittdarstellung ist ersichtlich, dass im Turbinengehäuse 9 zwei Fluten 22 und 23 vorgesehen sind, die mittels einer Trennwand 21 und eines Linearventils 35 fluidtechnisch voneinander getrennt sind. Das Linearventil 35 weist einen Ventilteller 34, einen Ventilkörper 36 und einen Verstellschaft 33 auf. Das Linearventilelement 35a ist an seinem Verstellschaft 33 über ein Ausgleichsgelenk 20 mit einem Linearaktuator 38 verbunden, welcher den Verstellschaft 33 über das Ausgleichsgelenk 20 in seiner Längsrichtung bewegt. Der Linearaktuator 38 ist am Verdichtergehäuse 11 des Abgasturboladers befestigt, innerhalb dessen das Verdichterrad 39 angeordnet ist. Dieses ist über die Welle 5 mit dem Turbinenrad 40 verbunden. Die Welle 5 ist in einem Lagergehäuse 41 gelagert. Ein Linearaktuator ist ebenso wie das vorgenannte Linearventil insbesondere dadurch gekennzeichnet, dass er eine geradlinige translatorische Stellbewegung ausführt.

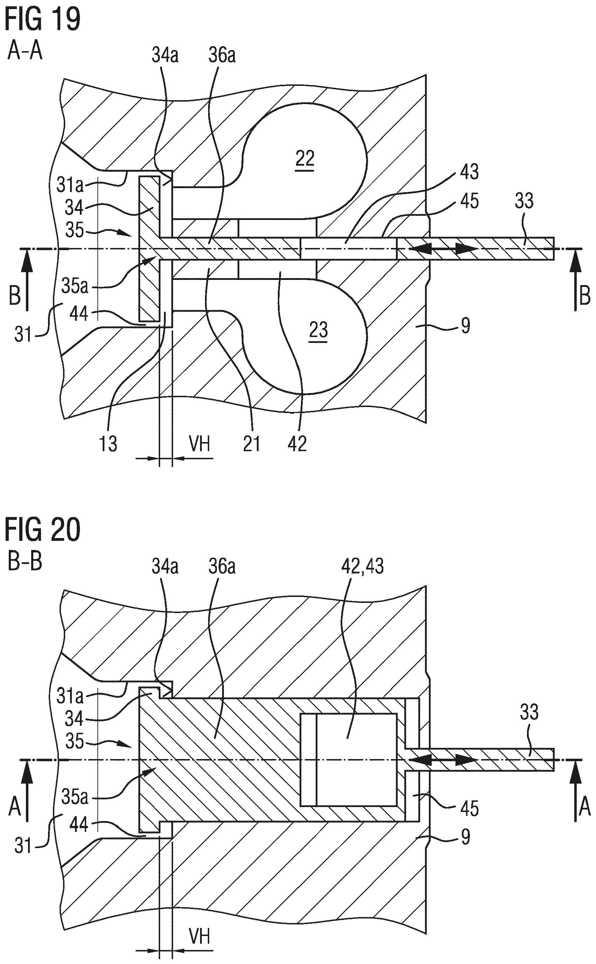

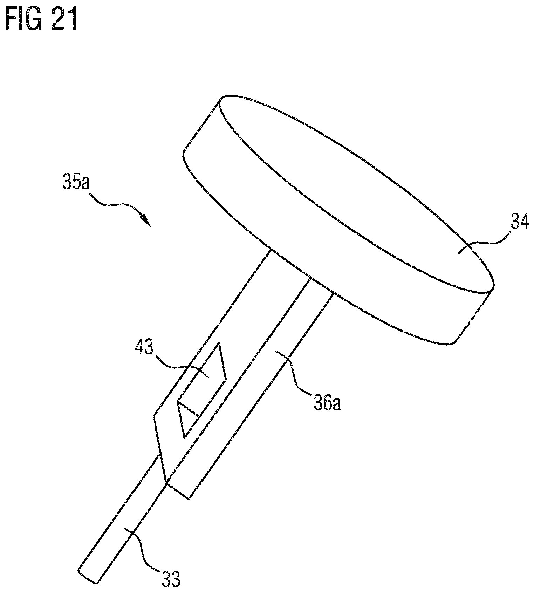

Die Figur 19 zeigt eine Schnittdarstellung senkrecht zum Verlauf der Fluten 22 und 23 sowie der Trennwand 21 durch ein Linearventil zur Steuerung des Flutenverbindungsquerschnitts und des Wastegate-Öffnungsquerschnitts, zur Veranschaulichung eines weiteren Ausführungsbeispiels für die Erfindung. Die Figur 20 zeigt eine Schnittdarstellung dieses Ausführungsbeispiels entlang der in der Figur 19 gezeigten Schnittlinie B-B, also in Richtung des Fluten- und Trennwandverlaufs. Desweiteren zeigt Figur 21 eine perspektivische Darstellung des anhand der Figuren 19 und 20 erläuterten Linearventilkörpers 35a.

Bei diesem Ausführungsbeispiel ist demnach die Turbine dadurch gekennzeichnet dass das Linearventilelement 35a zumindest einen Ventilteller 34, zum Verschließen der Wastegate-Öffnung 13 durch dichte Auflage des Ventiltellers 34 auf einem die Wastegate-Öffnung 13 umfassenden Ventilsitz 34a und einen Verstellschaft 33 zur Betätigung des Linearventilelements 35a durch Axialverschiebung aufweist. Weiterhin mündet die Wastegate-Öffnung 13 hier in einen im Auslassraum 31 ausgebildeten Auslasstrichter 31a, der sich an den Ventilsitz 34a anschließt, wobei ein Wastegate-Öffnungsquerschnitt durch einen Trichterspalt 44 zwischen dem Außenrand des Ventiltellers 34 und der Wand des Auslasstrichters 31 des Wastegate-Ventils 32 im Turbinengehäuse 9 vorgegeben ist.

In weiterer Ausgestaltung des vorgenannten Ausführungsbeispiels ist die Turbine dadurch gekennzeichnet, dass das Linearventilelement 35a einen zwischen dem Ventilteller 34 und dem Verstellschaft 33 angeordneten Ventilkörper aufweist, der als Schieberplatte 36a ausgebildet ist und in einer korrespondierenden nutförmigen oder taschenförmigen Schieberausnehmung 45 in der zwischen den beiden Fluten 22 und 23 vorgesehenen Trennwand 21 geführt ist, wobei die Trennwand 21 im Bereich der Schieberausnehmung 45 eine Durchgangsausnehmung 42 aufweist, die die Trennwand 21 senkrecht zur Trennwandebene durchdringt und die in einer ersten Ventilstellung durch die Schieberplatte 36a des Linearventilelements 35a verschlossen ist, wobei die Durchgangsausnehmung 42 bei einem fortschreitenden Ventil-Öffnungshub VH des Linearventilelements 35a von der Schieberplatte 36a mit in Abhängigkeit vom Ventil-Öffnungshub VH ansteigendem Flutenverbindungsquerschnitt freigegeben wird.

Die Figuren 19, 20 und 21 zeigen eine mögliche konkrete Gestaltung des genannten Ausführungsbeispiels, auf die dieses Ausführungsbeispiel jedoch nicht beschränkt ist. Aus der Betrachtung der Figuren 19, 20 und 21 in Kombination sind insbesondere die Ausgestaltung des Ventilkörpers als flache Schieberplatte 36a und die Anordnung der Durchgangsausnehmungen 42 und 43 in der Schieberplatte 36a und der Trennwand 21 ersichtlich. Es ist weiterhin ersichtlich, dass dieses Linearventil 35 einen als Rundklappenteller realisierten Ventilteller 34 zur dichtenden Auflage auf einem Ventilsitz 34 und einen Verstellschaft 33 aufweist.

Die zwischen den beiden Fluten 22 und 23 vorgesehene Trennwand 21 weist eine nutförmige oder taschenförmige Schieberausnehmung 45 und eine, hier rechteckig dargestellte Durchgangsausnehmung 42 auf, die die Trennwand im Bereich der Schieberausnehmung senkrecht zur Trennwandebene durchdringt.

Die Schieberplatte 36a weist ebenfalls eine, hier rechteckig dargestellte, Durchgangsausnehmung 43 auf, die die Schieberplatte 36a senkrecht zur Schieberplattenebene durchdringt. Die Schieberplatte 36a ist des Weiteren mit dem Verstellschaft 33 verbunden oder einstückig mit diesem ausgebildet.

Statt einer solchen Durchgangsausnehmung 43 in der Schieberplatte 36a, kann die Schieberplatte beispielsweise auch einfach verkürzt, mit einem entsprechend verlängerten Verstellschaft 33, ausgebildet sein. Jedoch darf die Schieberplatte 36a nur so weit verkürzt sein, dass, im geschlossenen Zustand des Linearventils 35, die Durchgangsausnehmung 42 in der Trennwand 21 vollständig abgedeckt, also geschlossen ist.

Der als Schieberplatte ausgebildete Ventilkörper 36 ist in einer korrespondierenden nut- oder taschenförmigen Schieberausnehmung 45 in der Trennwand 21 geführt. Die Positionierung der Durchgangsausnehmung 43 in der Schieberplatte 36a und die Positionierung der Durchgangsausnehmung 42 in der Trennwand 21 im Bereich der nut- oder taschenförmigen Schieberausnehmung 45 ist so gewählt, dass bei geschlossenem Linearventil 35 die Durchgangsausnehmung 43 in der Schieberplatte 36a durch die Trennwand 21 abgedeckt ist und die Durchgangsausnehmung 42 in der Trennwand 21 durch die Schieberplatte 36a geschlossen ist, sowie die Wastegate-Öffnung 13 durch den Ventilteller 34 geschlossen ist.

Durch eine Linearbewegung des Linearventilelements 35a mittels des Verstellschaftes 33 in Öffnungsrichtung wird der Ventilteller 34 zusammen mit der Schieberplatte 36a linear so verschoben, dass die Durchgangsausnehmung 43 in der Schieberplatte 36a zunehmend mit der Durchgangsausnehmung 42 in der Trennwand 21 zur Überschneidung kommt und so einen Flutenverbindungsquerschnitt freigibt, so dass die beiden Fluten 22 und 23 fluidtechnisch miteinander verbunden sind.

Gleichzeitig wird der Ventilteller 34 vom Ventilsitz 34a abgehoben und ein Wastegate-Öffnungsquerschnitt freigegeben, der im Wesentliche durch den Trichterspalt 44 zwischen dem Außenrand des Ventiltellers 34 und dem Auslasstrichter 31a des Wastegate-Ventils vorgegeben ist.

Der Flächenverlauf der Flutenverbindung im Verhältnis zum Ventil-Öffnungshub des Linearventilelements 35a kann dabei über die Form und Dimensionierung der Durchgangsausnehmungen 42 und 43 in der Schieberplatte 36a und der Trennwand 21 in gewünschter Weise gestaltet werden.

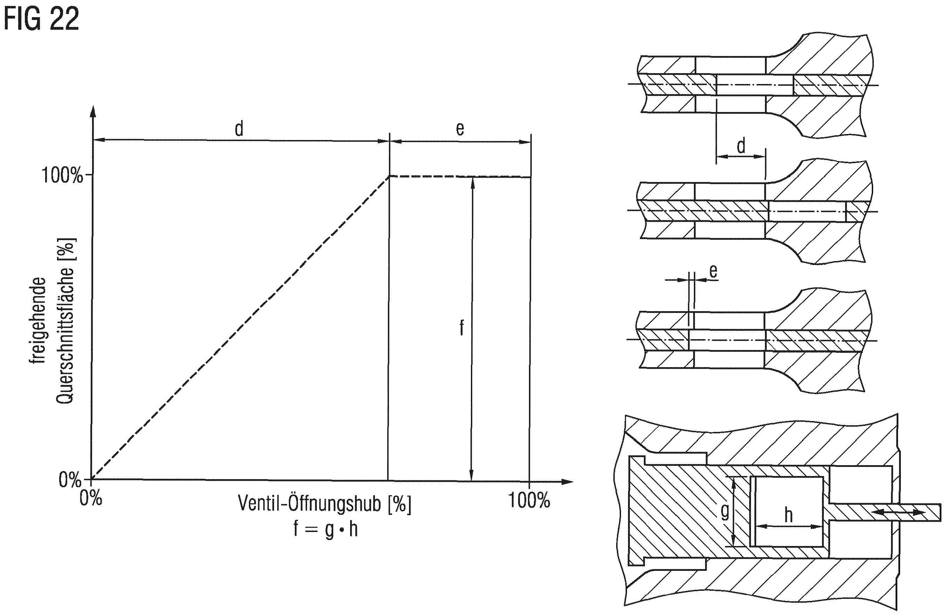

Die Figur 22 zeigt Darstellungen zur Veranschaulichung des Öffnungsverlaufs des Flutenverbindungsquerschnitts in Abhängigkeit vom Ventil-Öffnungshub des Linearventils 35. Es ist ersichtlich, dass bei einem Öffnen der Flutenverbindung durch Überlappung der Durchgangsausnehmungen 42 und 43 der geöffnete Flutenverbindungsquerschnitt zunächst linear ansteigt, wie es im Bereich d des Ventil-Öffnungshubs im linken Diagramm der Figur 22 mit einer gestrichelten Linie veranschaulicht ist. In dem in der Figur 22 gezeigten Bereich e bleibt die Querschnittsfläche der Flutenverbindung konstant, bis das Linearventil vollständig geöffnet ist, da in diesem Bereich die maximale Öffnung der

Durchgangsausnehmung 42 in der Trennwand 21 freigegeben bleibt. Des Weiteren ist in der Figur 22 veranschaulicht, dass, in diesem Ausgestaltungsbeispiel, für den geöffneten Flutenverbindungsquerschnitt f, bei rechteckiger Ausgestaltung der Durchgangsausnehmungen 42 und 43 die folgende Beziehung gilt:

$$f = g \times h,$$

wobei g die Breite der Durchgangsausnehmungen 42 und 43 ist und h die durch die Durchgangsausnehmung 43 der Schieberplatte 36a freigegebenen Öffnungshöhe der Durchgangsausnehmungen 42 ist.

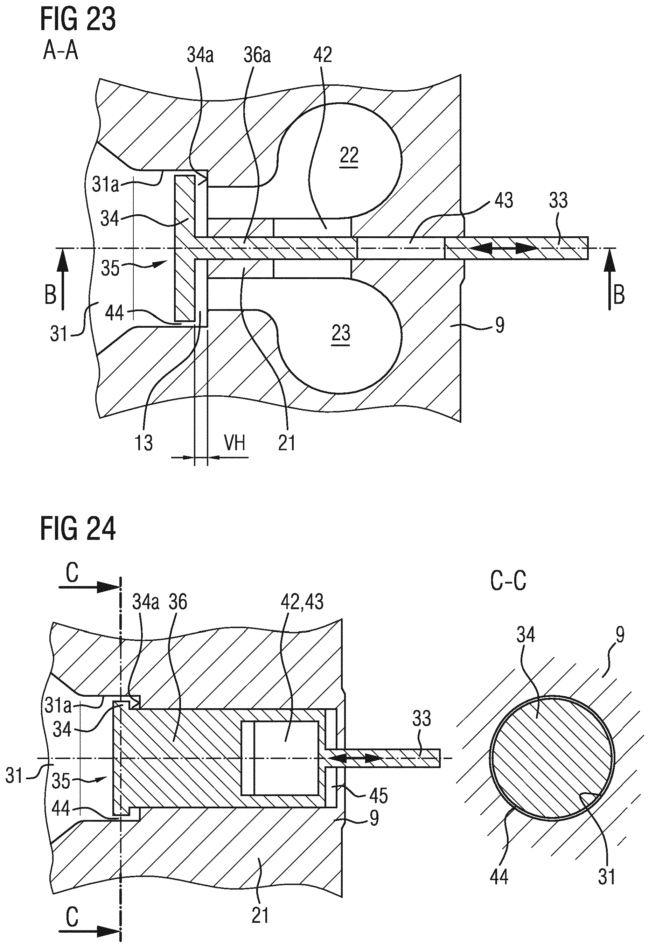

Die Figur 23 zeigt eine Schnittdarstellung zur Veranschaulichung eines weiteren Ausführungsbeispiels für die Erfindung, die eine Abwandlung des in den Figuren 19 und 20 gezeigten Beispiels darstellt. Bei diesem Ausführungsbeispiel ist die Anordnung und Dimensionierung der Durchgangsausnehmungen 42 und 43 derart gewählt, dass bei einer fortschreitenden Öffnung des Linearventils 35 aus dem geschlossenen Zustand zunächst der Ventilteller 34 die Wastegate-Öffnung freigibt und dass die Öffnung des Flutenverbindungsquerschnitts verzögert erfolgt. Um dies zu erreichen, muss die in der Schieberplatte 36a vorgesehene Durchgangsausnehmung 43 derart in der Schieberplatte 36a angeordnet sein, dass ausgehend von der geschlossenen Position des Linearventils der Verstellschaft 33 und die Schieberplatte 36a erst um einen vorgegebenen Ventil-Öffnungshub (VH) verschoben werden müssen, bevor ein Flutenverbindungsquerschnitt, gegenüber der Öffnung des Wastegate-Öffnungsquerschnittes verzögert, freigegeben wird.

Die Figur 24 zeigt eine Schnittdarstellung zur Veranschaulichung eines weiteren Ausführungsbeispiels für die Erfindung, welches insbesondere in Kombination oder Abwandlung der beiden vorausgehenden Ausführungsbeispiele verwendet werden kann. Bei diesem Ausführungsbeispiel ist zum Zwecke einer gezielten Gestaltung des Wastegate-Massenstroms in Abhängigkeit vom Ventil-Öffnungshub ein bestimmter, geeignet dimensionierter, sich gegebenenfalls in Abhängigkeit vom Ventil-Öffnungshub verändernder Trichterspalt 44 zwischen dem Außenrand des Ventiltellers 34 und der benachbarten Gehäusewand eines Auslasstrichters 31a des Wastegate-Ventils im Turbinengehäuse 9 vorgesehen. Dadurch kann, wie in diesem Beispiel gezeigt, der Wastegate-Öffnungsquerschnitt über einen vergleichsweise großen Ventil-Öffnungshub des Linearventils 35 auf einem konstanten Niveau gehalten werden, da sich der Trichterspalt 44 zwischen dem Außenrand des Ventiltellers 34 und der benachbarten Trichterwand zunächst nicht ändert. Erst nach dem Erreichen eines ausreichend großen Ventil-Öffnungshubes wird der Trichterspalt 44 aufgrund einer in diesem Bereich kegelförmigen Erweiterung des Auslasstrichters 31a des Wastegate-Ventils mit zunehmendem Ventil-Öffnungshub größer, was eine Zunahme des Wastegate-Öffnungsquerschnittes mit sich bringt.

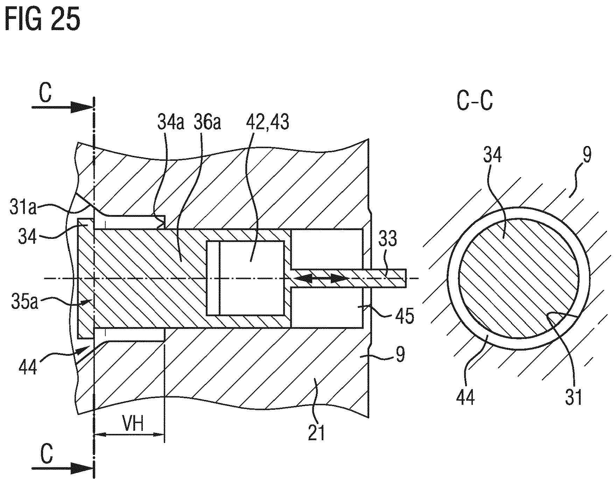

Diese Zunahme des Wastegate-Öffnungsquerschnitts ist in der Figur 25 veranschaulicht, in welcher auf der linken Seite das im Vergleich zur Figur 24 weiter nach links, in Öffnungsrichtung, verschobene Linearventilelement 35a dargestellt ist. Des Weiteren ist aus der Figur 25 ersichtlich, dass der Trichterspalt 44 zwischen dem radialen Außenrand des Ventiltellers 34 und der benachbarten Auslasstrichterwand aufgrund der in diesem Bereich des Turbinengehäuses vorgesehenen kegelförmigen Ausgestaltung des Auslasstrichters 31a des Wastegate-Ventils zunehmend größer wird.

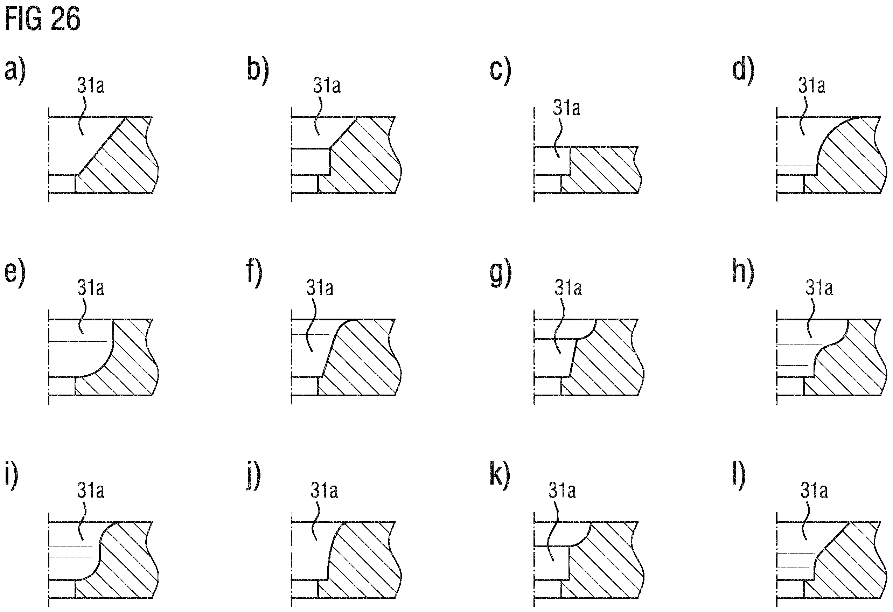

Die Figur 26 zeigt beispielhafte Darstellungen zur Veranschaulichung verschiedener Konturen des Trichtermantels des Auslasstrichters 31a des Wastegate-Ventils, die unterschiedliche Ausführungsvarianten der vorgenannten Ausführungsbeispiele aufzeigen.

Die entsprechenden Ausführungsvarianten sind dadurch gekennzeichnet, dass die Form des Auslasstrichters 31a bestimmt ist durch eine kreisförmige oder eine dreieckige oder eine rechteckige oder eine vieleckige Grundfläche, gepaart mit einer Kontur der Trichter-Mantelflächen in Form von einer Kegelgeometrie oder einer Zylindergeometrie oder einer kreis-, parabel- oder hyperbelförmig sich erweiternden Geometrie oder durch Kombinationen aus zwei oder drei der vorgenannten geometrischen Konturen, so dass der Wastegate-Öffnungsquerschnitt abhängig ist vom Ventil-Öffnungshub VH in Kombination mit der vorgegebenen Form des Auslasstrichters 31a.

Dabei ist in Figur 26 der jeweilige Auslasstrichter 31a ausgehend von einer rotationssymmetrischen Ausgestaltung, also einer kreisförmigen Grundfläche, jeweils im Halbschnitt dargestellt. Selbstverständlich kann, abhängig von bzw. in Übereinstimmung mit der Umfangsgeometrie des Ventiltellers, der jeweilige Auslasstrichter 31a auch eine dreieckige, rechteckige oder vieleckige Grundfläche gepaart mit den in Figur 26 qualitativ dargestellten Konturen der Trichter-Mantelflächen aufweisen. Die Figuren 26 a) bis 26 l) zeigen alternative Konturen der Trichter-Mantelflächen von einer einfachen Kegelgeometrie (Fig. 26 a) und einer Zylindergeometrie (Fig. 26 c), über eine kreis-, parabel- oder hyperbelförmig sich erweiternde Geometrie (Figuren 26 d), 26 e), 26 f)) bis hin zu Kombinationen aus zwei oder drei der vorgenannten Geometrien (Figuren 26 g) bis 26 l)). Darüber hinaus sind weitere Kombinationen möglich, die je nach dem gewünschten Verlauf des Wastegate-Öffnungsquerschnitts in Abhängigkeit vom Ventil-Öffnungshub gestaltet werden können.

Bei allen diesen Konturen geht eine weitere Öffnung des Linearventils einher mit einer Vergrößerung des Wastegate-Öffnungsquerschnitts, bei welcher der Spalt zwischen dem Ventiltelleraußenrand und der Wand des Auslasstrichters in Abhängigkeit vom der Ventil-Öffnungshub in gewünschter Weise eingestellt werden kann.

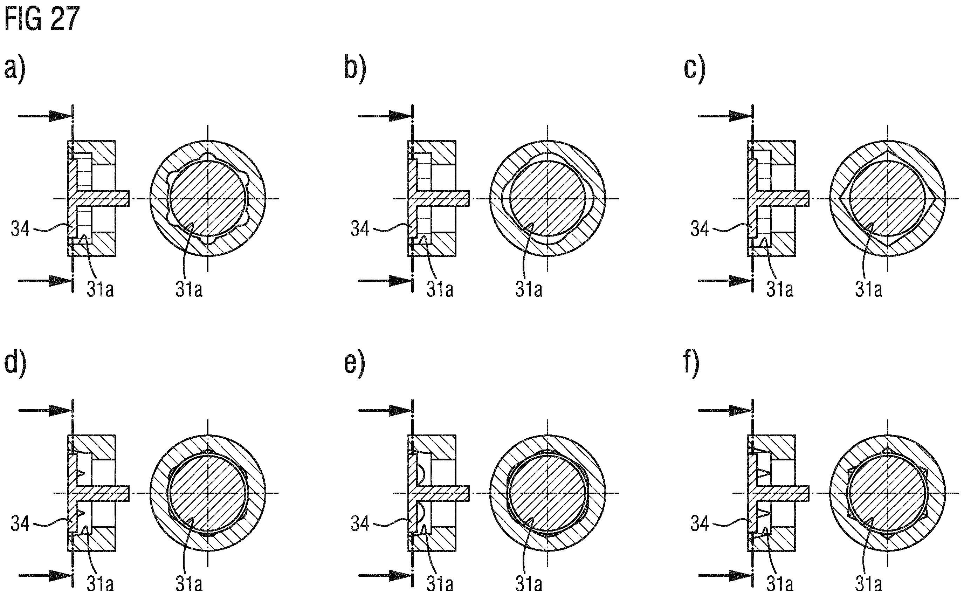

Die Figur 27 zeigt weitere Beispiele für die Modifizierung der Mantelkonturen des Auslasstrichters 31a des Wastegate-Ventils im Turbinengehäuse. In den gezeigten Beispielen Fig. 27 a) bis 27 f) liegt der Geometrie des jeweiligen Auslasstrichters 31a jeweils eine kreisförmigen Grundfläche und eine zylinderförmige Kontur zugrunde. Die Modifikationen bestehen dabei in der Anordnung von in axialer Richtung des Auslasstrichters 31a verlaufenden, über den Umfang des Auslasstrichters 31a verteilten Kerben, Nuten oder Ausbuchtungen unterschiedlicher Geometrie und Ausprägung. Beispielsweise kann der Querschnitt der Kerben, Nuten oder Ausbuchtungen halbrund, halbelliptisch, v-förmig oder rechteckig ausgebildet sein. Dabei kann die Tiefe und/oder Breite der Kerben, Nuten oder Ausbuchtungen über deren axialen Verlauf konstant ausgebildet sein oder sich über den axialen Verlauf kontinuierlich oder stufenweise ändern. Diese Modifikationen dienen zur Vergrößerung oder Anpassung der bei vorgegebenem Ventil-Öffnungshub freigegebenen Querschnittsfläche zwischen Außenumfang des Ventiltellers 34 und der Wand des Auslasstrichters 31a des Wastegate-Ventils.

Die vorstehend beschriebene Erfindung stellt nach alledem eine Turbine für einen Abgasturbolader bereit, welche zwei von einem Abgas durchströmbare Fluten aufweist, zwischen denen eine Trennwand vorgesehen ist. Des Weiteren ist ein als Linearventil ausgebildetes Wastegate-Ventil vorgesehen, welches ein Linearventilelement mit einem Verstellschaft aufweist, wobei das Linearventilelement und der Verstellschaft durch die zwischen den Fluten vorgesehene Trennwand geführt ist. Dabei ist das Linearventilelement zentrisch zu einer Wastegate-Öffnung des Turbinengehäuses geführt und aus Richtung des Auslassraumes gegen einen Ventilsitz geführt und kann mittels des Verstellschafts zur Öffnung der Wastegate-Auslässe in Axialrichtung der Schaft-Längsachse in den Auslassraum hinein vom Ventilsitz abgehoben werden. In vorteilhafter weiterer Ausführung ist das Linearventilelement dazu vorgesehen, die Wastegate-Öffnung und eine Flutenverbindung zwischen den beiden Fluten freizugeben oder zu sperren. Dabei besteht eine vorteilhafte Ausgestaltung darin, einen Ventilkörper vorzusehen und so auszubilden, dass zuerst ein Wastegate-Öffnungsquerschnitt freigegeben wird, ohne zunächst die Flutenverbindung zu öffnen. Erst bei weiterer Zunahme des Ventil-Öffnungshubes des Linearventilelements, also einem weiteren Öffnen des Linearventils wird auch der Flutenverbindungsquerschnitt zunehmend freigegeben.

Durch die Verwendung eines Linearventils ergeben sich Vorteile, die in reduzierten Kosten aufgrund einer Verwendung von weniger Einzelteilen und weniger Fügevorgängen, einem reduzierten Bauraumbedarf, einem größeren Freiheitsgrad bei der Gestaltung des Ventilkörpers und einem weniger verschleißanfälligen Design aufgrund kleinerer Spiele bestehen.

## Patentansprüche

1.   Turbine (3) für einen Abgasturbolader (2) mit einem Turbinengehäuse (9), welches zwei von einem Abgas durchströmbare Fluten (22, 23) aufweist, zwischen denen eine Trennwand (21) vorgesehen ist, und mit nur einem als Linearventil (35) ausgebildeten Wastegate-Ventil (32) für beide Fluten (22, 23), welches ein Linearventilelement (35a) zum Öffnen und Schließen von Wastegate-Auslässen (30) der beiden Fluten (22, 23) hin zu einem gemeinsamen, außerhalb der Fluten (22, 23) angeordneten Auslassraum (31) aufweist,

- wobei das Linearventilelement (35a) aus Richtung des Auslassraumes (31) zum Verschließen der Wastegate-Auslässe (30) gegen einen Ventilsitz (34a) geführt ist,

**dadurch gekennzeichnet, dass**

das Linearventilelement (35a) mit einem Verstellschaft (33), der eine Schaft-Längsachse (33a) aufweist, zur Betätigung des Linearventilelements (35a) verbunden ist, wobei der Verstellschaft (33) in Richtung einer durch die Trennwand (21) aufgespannten Trennwandebene durch die Trennwand (21) aus dem Turbinengehäuse (9) heraus geführt ist und in Axialrichtung seiner Schaft-Längsachse (33a) in der Trennwand (21) beweglich geführt angeordnet ist und

wobei das Linearventilelement (35a) mittels des Verstellschafts (33), zur Öffnung der Wastegate-Auslässe (30) in Axialrichtung der Schaft-Längsachse (33a) in den Auslassraum (31) hinein, vom Ventilsitz abhebbar ist.

2. Turbine nach Anspruch 1, **dadurch gekennzeichnet, dass** das Wastegate-Ventil (32) nur eine Wastegate-Öffnung (13) aufweist, in der die Wastegate-Auslässe (30) der beiden Fluten zusammengefasst sind, wobei die Wastegate-Öffnung (13) in einer ersten Ventilstellung durch das Linearventilelement (35a) geschlossen ist und zumindest in einer zweiten Ventilstellung des Linearventilelements (35a) geöffnet ist.

3. Turbine nach Anspruch 2, **dadurch gekennzeichnet, dass** das Linearventilelement (35a) in der ersten Ventilstellung die beiden Fluten (22, 23) fluidtechnisch voneinander getrennt hält, und zumindest eine weitere Ventilstellung aufweist, in welcher eine fluidtechnische Verbindung der beiden Fluten (22, 23) miteinander, durch das Linearventilelement (35a) freigegeben ist.

4. Turbine nach Anspruch 2 oder 3, **dadurch gekennzeichnet, dass** das Linearventilelement (35a) einen Ventilteller (34) aufweist, der zum Verschließen der Wastegate-Öffnung (13) durch dichte Auflage des Ventiltellers (34) auf einem die Wastegate-Öffnung (13) umgebenden Ventilsitz (34a) aus Richtung des Auslassraumes (31) gegen den Ventilsitz (34a) geführt ist.

5. Turbine nach Anspruch 4, **dadurch gekennzeichnet, dass** das Linearventilelement (35a) einen zwischen dem Ventilteller (34) und dem Verstellschaft (33) angeordneten Ventilkörper (36) aufweist, der in einer Trennwandausnehmung (21a) der Trennwand (21) und zugleich zentrisch in der Wastegate-Öffnung (13) des Turbinengehäuses (9) angeordnet ist, wobei ein Wastegate-Öffnungsquerschnitt durch einen zwischen Außenumfang des Ventilkörpers (36) und Innenumfang der Wastegate-Öffnung (13) ausgebildeten Ventilspalt (13a) bestimmt ist und wobei ein Flutenverbindungsquerschnitt durch die vom Ventil-Öffnungshub (VH) abhängige Freigabe der Trennwandausnehmung (21a) durch den Ventilkörper (36) bestimmt ist.

6. Turbine nach Anspruch 5, **dadurch gekennzeichnet, dass** der Ventilkörper (36) zylinderförmig oder ellipsenförmig oder kegelförmig oder kegelstumpfförmig oder pyramidenförmig oder pyramidenstumpfförmig oder quaderförmig ausgebildet ist oder eine Kombination aus zumindest zwei der vorgenannten Geometrien aufweist.

7. Turbine nach einem der Ansprüche 5 oder 6, **dadurch gekennzeichnet, dass** der Ventilkörper (36) derart ausgebildet ist, dass ausgehend von der ersten, geschlossenen Ventilstellung des Linearventilelements (35a), bei einem kontinuierlich ansteigenden Ventil-Öffnungshub (VH) des Linearventilelements (35a), mittels Axialverschiebung des Verstellschaftes (33), der Wastegate- Öffnungsquerschnitt zunächst linear erhöht wird, dann über eine bestimmte Strecke des Ventil-Öffnungshubes (VH) konstant gehalten wird und dann erneut linear erhöht wird, bis eine Ventil-Endstellung erreicht ist.

8. Turbine nach einem der Ansprüche 5 bis 7, **dadurch gekennzeichnet, dass** der Ventilkörper (36) derart ausgebildet ist, dass ausgehend von der ersten, geschlossenen Ventilstellung des Linearventilelements (35a), bei einem kontinuierlich ansteigenden Ventil-Öffnungshub (VH) des Linearventilelements (35a), mittels Axialverschiebung des Verstellschaftes (33), der Flutenverbindungsquerschnitt durchgehend kontinuierlich erhöht wird, bis ein maximaler Flutenverbindungsquerschnitt erreicht ist und dann konstant bleibt, bis eine Ventil-Endstellung erreicht ist.

9. Turbine nach den Ansprüchen 7 und 8, **dadurch gekennzeichnet, dass** die kontinuierliche Erhöhung des Flutenverbindungsquerschnitts erst nach Überschreitung eines vorgegebenen Ventil-Öffnungshubes (VH), also verzögert gegenüber der Öffnung des Wastegate-Öffnungsquerschnitts, beginnt.

10. Turbine nach Anspruch 4, **dadurch gekennzeichnet, dass** die Wastegate-Öffnung des Wastegate-Ventils (32) einen Ventilsitz (34a) zur dichtenden Auflage des Ventiltellers (34) aufweist und in einen im Auslassraum (31) ausgebildeten Auslasstrichter (31a) mündet, der sich an den Ventilsitz (34a) anschließt, wobei ein Wastegate-Öffnungsquerschnitt durch einen Trichterspalt (44) zwischen dem Außenrand des Ventiltellers (34) und der Wand des Auslasstrichters (31) des Wastegate-Ventils (32) im Turbinengehäuse (9) vorgegeben ist.

11. Turbine nach Anspruch 10, **dadurch gekennzeichnet, dass** das Linearventilelement (35a) einen zwischen dem Ventilteller (34) und dem Verstellschaft (33) angeordneten Ventilkörper aufweist, der als Schieberplatte (36a) ausgebildet ist und in einer korrespondierenden nutförmigen oder taschenförmigen Schieberausnehmung (45) in der zwischen den beiden Fluten (22 und 23) vorgesehenen Trennwand (21) geführt ist, wobei die Trennwand (21) im Bereich der Schieberausnehmung (45) eine Durchgangsausnehmung (42) aufweist, die die Trennwand (21) senkrecht zur Trennwandebene durchdringt und die in einer ersten Ventilstellung durch die Schieberplatte (36a) des Linearventilelements (35a) verschlossen ist, wobei die Durchgangsausnehmung (42) bei einem fortschreitenden Ventil-Öffnungshub (VH) des Linearventilelements (35a) von der Schieberplatte (36a) mit in Abhängigkeit vom Ventil-Öffnungshub (VH) ansteigendem Flutenverbindungsquerschnitt freigegeben wird.

12. Turbine nach einem der Ansprüche 10 oder 11, **dadurch gekennzeichnet, dass** die Form des Auslasstrichters (31) bestimmt ist durch eine kreisförmige oder eine dreieckige oder eine rechteckige oder eine vieleckige Grundfläche, gepaart mit einer Kontur der Trichter-Mantelflächen in Form von einer Kegelgeometrie oder einer Zylindergeometrie oder einer kreis-, parabel- oder hyperbelförmig sich erweiternden Geometrie oder durch Kombinationen aus zwei oder drei der vorgenannten geometrischen Konturen, so dass der Wastegate-Öffnungsquerschnitt abhängig ist vom Ventil-Öffnungshub (VH) in Kombination mit der vorgegebenen Form des Auslasstrichters.

13. Turbine nach einem der vorhergehenden Ansprüche, **dadurch gekennzeichnet, dass** das Linearventilelement (35a) über ein Ausgleichsgelenk (20) mit einem Linearaktuator (38) verbunden ist.

**Claims**

1. Turbine (3) for an exhaust-gas turbocharger (2), having a turbine housing (9) which has two volutes (22, 23) through which an exhaust gas can flow and between which a separating wall (21) is provided, and having only one wastegate valve (32), designed as a linear valve (35), for both volutes (22, 23), which wastegate valve has a linear valve element (35a) for opening and closing wastegate outlets (30) of the two volutes (22, 23) in the direction of a common outlet chamber (31) arranged outside the volutes (22, 23),

- wherein the linear valve element (35a) is, in order to close the wastegate outlets (30), guided from the direction of the outlet chamber (31) toward a valve seat (34a),

   **characterized in that**
   the linear valve element (35a) is connected to a displacement shaft (33), which has a shaft longitudinal axis (33a), for actuating the linear valve element (35a), wherein the displacement shaft (33) is guided out of the turbine housing (9) through the separating wall (21) in the direction of a separating wall plane spanned by the separating wall (21), and is arranged so as to be guided movably in the direction of its shaft longitudinal axis (33a) in the separating wall (21), and wherein the linear valve element (35a) can be lifted off from the valve seat by means of the displacement shaft (33) in order to open the wastegate outlets (30) in the axial direction of the shaft longitudinal axis (33a) into the outlet chamber (31).

2. Turbine according to Claim 1, **characterized in that** the wastegate valve (32) has only one wastegate opening (13), in which the wastegate outlets (30) of the two volutes are combined, wherein the wastegate opening (13) is closed in a first valve position by the linear valve element (35a) and is open at least in a second valve position of the linear valve element (35a).

3. Turbine according to Claim 2, **characterized in that** the linear valve element (35a), in the first valve position, keeps the two volutes (22, 23) fluidically separate from one another, and has at least one further valve position, in which a fluidic connection of the two volutes (22, 23) to one another is opened up by the linear valve element (35a).

4. Turbine according to Claim 2 or 3, **characterized in that** the linear valve element (35a) has a valve disc (34) which is, in order to close the wastegate opening (13) by sealed abutment of the valve disc (34) on a valve seat (34a) surrounding the wastegate opening (13), guided from the direction of the outlet chamber (31) toward the valve seat (34a) .

5. Turbine according to Claim 4, **characterized in that** the linear valve element (35a) has a valve body (36) which is arranged between the valve disc (34) and the displacement shaft (33) and which is arranged in a separating wall recess (21a) of the separating wall (21) and which is at the same time arranged centrally in the wastegate opening (13) of the turbine housing (9), wherein a wastegate opening cross section is defined by a valve gap (13a) formed between the outer circumference of the valve body (36) and the inner circumference of the wastegate opening (13), and wherein a volute connection cross section is defined by the opening-up of the separating wall recess (21a) by the valve body (36), said opening-up being dependent on the valve opening stroke (VH) .

6. Turbine according to Claim 5, **characterized in that** the valve body (36) is of cylindrical or elliptical or conical or frustoconical or pyramid-shaped or truncated-pyramid-shaped or cuboidal form, or has a combination of at least two of the above-stated geometries.

7. Turbine according to either of Claims 5 and 6, **characterized in that** the valve body (36) is designed such that, proceeding from the first, closed valve position of the linear valve element (35a), in the case of a continuously increasing valve opening stroke (VH) of the linear valve element (35a) by means of axial displacement of the displacement shaft (33), the wastegate opening cross section is initially increased linearly, is then kept constant over a certain extent of the valve opening stroke (VH), and is then linearly increased again, until a valve end position is reached.

8. Turbine according to any of Claims 5 to 7, **characterized in that** the valve body (36) is designed such that, proceeding from the first, closed valve position of the linear valve element (35a), in the case of a continuously increasing valve opening stroke (VH) of the linear valve element (35a) by means of axial displacement of the displacement shaft (33), the volute connection cross section is increased continuously throughout until a maximum volute connection cross section is reached, and then remains constant until a valve end position is reached.

9. Turbine according to Claims 7 and 8, **characterized in that** the continuous increase of the volute connection cross section begins only after a predefined valve opening stroke (VH) has been travelled through, that is to say begins with a delay in relation to the opening of the wastegate opening cross section.

10. Turbine according to Claim 4, **characterized in that** the wastegate opening of the wastegate valve (32) has a valve seat (34a) for the sealed abutment of the valve disc (34) and opens into an outlet funnel (31a) formed in the outlet chamber (31), which outlet funnel adjoins the valve seat (34a), wherein a wastegate opening cross section is predefined by a funnel gap (44) between the outer edge of the valve disc (34) and the wall of the outlet funnel (31) of the wastegate valve (32) in the turbine housing (9).

11. Turbine according to Claim 10, **characterized in that** the linear valve element (35a) has a valve body which is arranged between the valve disc (34) and the displacement shaft (33) and which is designed as a slide plate (36a) and which is guided in a corresponding groove-like or pocket-like slide recess (45) in the separating wall (21) provided between the two volutes (22 and 23), wherein the separating wall (21) has, in the region of the slide recess (45), a passage recess (42) which extends through the separating wall (21) perpendicularly with respect to the separating wall plane and which, in a first valve position, is closed off by the slide plate (36a) of the linear valve element (35a), wherein the passage recess (42) is, in the case of a progressive valve opening stroke (VH) of the linear valve element (35a), opened up by the slide plate (36a) with a volute connection cross section which increases in a manner dependent on the valve opening stroke (VH) .

12. Turbine according to either of Claims 10 and 11, **characterized in that** the shape of the outlet funnel (31) is defined by a circular or a triangular or a rectangular or a polygonal outline paired with a contour of the funnel shell surfaces in the form of a cone geometry or a cylinder geometry or a circularly, parabolically or hyperbolically widening geometry or by combinations of two or three of the above-stated geometrical contours, such that the wastegate opening cross section is dependent on the valve opening stroke (VH) in combination with the predefined form of the outlet funnel.

13. Turbine according to any of the preceding claims, **characterized in that** the linear valve element (35a) is connected via a compensation joint (20) to a linear actuator (38) .

**Revendications**

1. Turbine (3) pour un turbocompresseur à gaz d'échappement (2), comprenant un carter de turbine (9) qui présente deux volutes (22, 23) pouvant être traversées par des gaz d'échappement et entre lesquelles est prévue une paroi de séparation (21), et comprenant une seule soupape de décharge (32), réalisée sous forme de soupape linéaire (35), pour les deux volutes (22, 23) qui présente un élément de soupape linéaire (35a) pour ouvrir et fermer des sorties de soupape de décharge (30) des deux volutes (22, 23) en direction d'un espace de sortie (31) commun, disposé à l'extérieur des volutes (22, 23),

- l'élément de soupape linéaire (35a) étant guidé en venant de l'espace de sortie (31) pour fermer les sorties de soupape de décharge (30) contre un siège de soupape (34a),

**caractérisée en ce que** l'élément de soupape linéaire (35a) est relié à une tige de réglage (33) qui présente un axe longitudinal de tige (33a) pour actionner l'élément de soupape linéaire (35a), la tige de réglage (33) sortant du carter de turbine (9) à travers la paroi de séparation (21) en direction d'un plan de paroi de séparation formé par la paroi de séparation (21) et est disposée dans la paroi de séparation (21) en étant guidée de manière mobile dans la direction axiale de son axe longitudinal de tige (33a), et dans laquelle l'élément de soupape linéaire (35a) peut être soulevé du siège de soupape au moyen de la tige de réglage (33) pour ouvrir les sorties de soupape de décharge (30) dans la direction axiale de l'axe longitudinal de tige (33a) à l'intérieur de l'espace de sortie (31).

2. Turbine selon la revendication 1, **caractérisée en ce que** la soupape de décharge (32) ne présente qu'une seule ouverture de soupape de décharge (13) qui regroupe les sorties de soupape de décharge (30) des deux volutes, dans laquelle, dans une première position de soupape, l'ouverture de soupape de décharge (13) est fermée par l'élément de soupape linéaire (35a), et est ouverte au moins dans une deuxième position de soupape de l'élément de soupape linéaire (35a).

3. Turbine selon la revendication 2, **caractérisée en ce que** dans la première position de soupape, l'élément de soupape linéaire (35a) maintient les deux volutes (22, 23) en séparation fluidique l'une de l'autre, et présente au moins une autre position de soupape dans laquelle une communication fluidique des deux volutes (22, 23) l'une avec l'autre est libérée par l'élément de soupape linéaire (35a).

4. Turbine selon la revendication 2 ou 3, **caractérisée en ce que** l'élément de soupape linéaire (35a) présente une tête de soupape (34) qui, pour fermer l'ouverture de soupape de décharge (13) par un appui étanche de la tête de soupape (34) sur un siège de soupape (34a) entourant l'ouverture de soupape de décharge (13), est guidée contre le siège de soupape (34a) en venant de l'espace de sortie (31).

5. Turbine selon la revendication 4, **caractérisée en ce que** l'élément de soupape linéaire (35a) présente un corps de soupape (36) disposé entre la tête de soupape (34) et la tige de réglage (33) qui est disposé dans un évidement de paroi de séparation (21a) de la paroi de séparation (21) et en même temps de manière centrée dans l'ouverture de soupape de décharge (13) du carter de turbine (9), une section transversale d'ouverture de soupape de décharge étant déterminée par un passage de soupape (13a) réalisé entre la circonférence extérieure du corps de soupape (36) et la circonférence intérieure de l'ouverture de soupape de décharge (13), et une section transversale de raccordement de volute étant déterminée par la libération de l'évidement de paroi de séparation (21a) par le corps de soupape (36) dépendant de la course d'ouverture de soupape (VH).

6. Turbine selon la revendication 5, **caractérisée en ce que** le corps de soupape (36) est réalisé en forme de cylindre ou d'ellipse ou de cône ou de cône tronqué ou de pyramide ou de pyramide tronquée ou de parallélépipède ou présente une combinaison d'au moins deux desdites géométries.

7. Turbine selon l'une quelconque des revendications 5 ou 6, **caractérisée en ce que** le corps de soupape (36) est réalisé de telle sorte qu'en partant de la première position de soupape fermée de l'élément de soupape linéaire (35a), lorsqu'une course d'ouverture de soupape (VH) de l'élément de soupape linéaire (35a) augmente en continu, la section transversale d'ouverture de soupape de décharge est d'abord augmentée de manière linéaire au moyen d'un décalage axial de la tige de réglage (33), et est ensuite maintenue constante sur une certaine distance de la course d'ouverture de soupape (VH), et est ensuite à nouveau augmentée de manière linéaire jusqu'à ce qu'une position finale de soupape soit atteinte.

8. Turbine selon l'une quelconque des revendications 5 à 7, **caractérisée en ce que** le corps de soupape (36) est réalisé de telle sorte qu'en partant de la première position de soupape fermée de l'élément de soupape linéaire (35a), lorsqu'une course d'ouverture de soupape (VH) de l'élément de soupape linéaire (35a) augmente en continu, la section transversale de raccordement de volute est constamment augmentée en continu au moyen d'un décalage axial de la tige de réglage (33) jusqu'à ce qu'une section transversale de raccordement de volute maximale soit atteinte, et reste ensuite constante jusqu'à ce qu'une position finale de soupape soit atteinte.

9. Turbine selon les revendications 7 et 8, **caractérisée en ce que** l'augmentation continue de la section transversale de raccordement de volute ne commence qu'après un dépassement d'une course d'ouverture de soupape (VH) prédéfinie, c'est-à-dire en retard par rapport à l'ouverture de la section transversale d'ouverture de soupape de décharge.

10. Turbine selon la revendication 4, **caractérisée en ce que** l'ouverture de soupape de décharge de la soupape de décharge (32) présente un siège de soupape (34a) pour un appui étanche de la tête de soupape (34) et débouche sur un entonnoir de sortie (31a) réalisé dans l'espace de sortie (31) et qui est adjacent au siège de soupape (34a), une section transversale d'ouverture de soupape de décharge étant prédéfinie par un passage d'entonnoir (44) entre le bord extérieur de la tête de soupape (34) et la paroi de l'entonnoir de sortie (31) de la soupape de décharge (32) dans le carter de turbine (9).

11. Turbine selon la revendication 10, **caractérisée en ce que** l'élément de soupape linéaire (35a) présente un corps de soupape disposé entre la tête de soupape (34) et la tige de réglage (33), qui est réalisé sous forme de plaque coulissante (36a) et guidé dans un évidement de coulisseau (45) correspondant, en forme de rainure ou de poche, dans la paroi de séparation (21) prévue entre les deux volutes (22 et 23), dans laquelle la paroi de séparation (21) présente au niveau de l'évidement de coulisseau (45) un évidement traversant (42) pénétrant dans la paroi de séparation (21) perpendiculairement au plan de paroi de séparation, et qui, dans une première position de soupape, est fermé par la plaque coulissante (36a) de l'élément de soupape linéaire (35a), dans laquelle l'évidement traversant (42), lorsque la course d'ouverture de soupape (VH) de l'élément de soupape linéaire (35a) avance, est libéré par la plaque coulissante (36a) avec une section transversale de raccordement de volute augmentant en fonction de la course d'ouverture de soupape (VH).

12. Turbine selon l'une quelconque des revendications 10 ou 11, **caractérisée en ce que** la forme de l'entonnoir de sortie (31) est déterminée par une surface de base circulaire ou triangulaire ou rectangulaire ou polygonale, appariée avec un contour des surfaces latérales d'entonnoir sous la forme d'une géométrie conique ou d'une géométrique cylindrique ou d'une géométrie s'élargissant en forme de cercle, de parabole ou d'hyperbole ou par des combinaisons de deux ou trois desdits contours géométriques de sorte que la section transversale d'ouverture de soupape de décharge dépend de la course d'ouverture de soupape (VH) en combinaison avec la forme prédéfinie de l'entonnoir de sortie.

13. Turbine selon l'une quelconque des revendications précédentes, **caractérisée en ce que** l'élément de soupape linéaire (35a) est relié à un actionneur linéaire (38) par l'intermédiaire d'un joint de compensation (20).

FIG 1

FIG 2

# FIG 3

## FIG 4

## FIG 5

FIG 6

FIG 7

Detail A

36

A

FIG 8

36

# FIG 9

## FIG 10
### A-A

13a  36  30  21

31

34

35

22

33

35a

B

34a

B

33a

9

VH  13  30  21a

## FIG 11
### B-B

36  21

31

34

35

33

35a

A

A

34a

33a

9

VH  13  21a

FIG 12

freigehende
Querschnittsfläche [%]

Ventil-Öffnungshub [%]

FIG 13

100%

freigehende
Querschnittsfläche [%]

0%

0%                    Ventil-Öffnungshub [%]                    100%

FIG 14

FIG 15

# FIG 16

a)

A

A-A

A

b)

c)

d)

A

A-A

A

e)

f)

EP 3 455 477 B1

## FIG 17

A-A

## FIG 18

EP 3 455 477 B1

## FIG 19
A-A

## FIG 20
B-B

FIG 21

35a

34

43

36a

33

FIG 22

**FIG 23**
A-A

34a  36a  42

31a
34
35
B
44
31

13   VH   21

22

43   33

23

9

**FIG 24**

C

34a  36  42,43

31a
34
31
35
44

33

45
9

21

C

C-C

34      9

44      31

FIG 25

# FIG 26

a)

31a

b)

31a

c)

31a

d)

31a

e)

31a

f)

31a

g)

31a

h)

31a

i)

31a

j)

31a

k)

31a

l)

31a

EP 3 455 477 B1

FIG 27

a)   b)   c)

d)   e)   f)

**IN DER BESCHREIBUNG AUFGEFÜHRTE DOKUMENTE**

**In der Beschreibung aufgeführte Patentdokumente**

- WO 2013139762 A1
- WO 2013135548 A1
- DE 102013002894 A1
- DE 102010008411 A1
- DE 202014009873 U1